# EUROPÄISCHE PATENTSCHRIFT

(11) **EP 2 263 061 B1**
(45) Veröffentlichungstag und Bekanntmachung des Hinweises auf die Patenterteilung: **19.06.2013**
(21) Anmeldenummer: 09727747.9
(22) Anmeldetag: 02.04.2009
(51) Int. Cl.: G01B 11/02, G01B 11/24, G01J 3/50, G01N 21/25

(54) **VORRICHTUNG UND VERFAHREN ZUR OPTISCHEN 3D-VERMESSUNG UND ZUR FARBMESSUNG**
DEVICE AND METHOD FOR OPTICAL 3D MEASUREMENT AND FOR COLOR MEASUREMENT
DISPOSITIF ET PROCÉDÉ DE MESURE 3D OPTIQUE ET DE MESURE CHROMATIQUE

(30) Priorität: 03.04.2008 DE 102008017481
(43) Veröffentlichungstag der Anmeldung: 22.12.2010
(73) Patentinhaber: Sirona Dental Systems GmbH, 64625 Bensheim (DE)
(72) Erfinder: THIEL, Frank, 64372 Ober-Ramstadt (DE); FORNOFF, Peter, 64385 Reichelsheim 3 (DE)
(74) Vertreter: Sommer, Peter
(86) Internationale Anmeldenummer: PCT/EP2009/053912
(87) Internationale Veröffentlichungsnummer: WO 2009/121922

(56) Entgegenhaltungen:
- WO-A-2007/090865
- DE-A1-102005 043 627
- RUPRECHT A K ET AL: "CHROMATIC CONFOCAL DETECTION FOR HIGH-SPEED MICROTOPOGRAPHY MEASUREMENTS" PROCEEDINGS OF THE SPIE - THE INTERNATIONAL SOCIETY FOR OPTICAL ENGINEERING, SPIE, PO BOX 10 BELLINGHAM WA 98227-0010 USA, Bd. 5302, Nr. 1, 1. Januar 2003 (2003-01-01), Seiten 53-60, XP009084987 ISSN: 0277-786X

## Beschreibung

### Technisches Gebiet

Die Erfindung betrifft eine Vorrichtung und ein Verfahren zur optischen 3D-Vermessung und zur Farbmessung.

### Stand der Technik

Aus dem Stand der Technik sind mehrere Vorrichtungen zur optischen 3D-Vermessung bekannt. Die Vorrichtungen basieren oft auf optischen Messmethoden, wie der chromatischen konfokalen Messmethode oder der Triangulation- Messmethode.

Der Artikel "Chromatic confocal detection for high-speed microtopography measruements" (Ruprecht et al., Proc. SPIE 5302, 53 (2004), XP009084897) beschreibt ein chromatisches und konfokales Verfahren, das einen gesamten Tiefenscan unter Verwendung von konfokaler Topographie-Messungen ermöglicht. Dadurch sollen die mechanischen Bewegungen reduziert oder völlig darauf verzichtet werden, um die Vermessungszeiten zu verkürzen. Es wird eine Ausführungsform beschrieben, bei der ein chromatischer konfokaler Zeilensensor mit einem Zeilenfokus und einem Spektrometer verwendet wird. Die Tiefenauflösung wird dadurch verbessert, dass eine Vielzahl von Messungen in unterschiedlichen Tiefen durchgeführt wird. Zusätzliche Informationen über die Farbverteilung des Objekts werden ebenfalls ermittelt.

DE 10 2005 043 627 A1 beschreibt einen optischen Sensor und ein Verfahren zur optischen Abstands- und/oder Farbmessung nach dem chromatischen, konfokalen Abbildungsprinzip mit einer wellenlängenselektiven Auswertung des von einer Mess-Oberfläche reemittierten Lichtes mit einer Beleuchtungseinheit. Für die Ermittelung der Abstandsinformationen zwischen einem diffraktiven Linsenarray und der Oberfläche des Messobjekts wird die Information eines Messpunktes des ersten wellenlängenselektiven Empfängers und dem korrespondieren Signal des zweiten wellenlängenselektiven Empfängers korrigiert. Diese korrigierten Werte lassen sich direkt in Höheninformation umwandeln. Die ortaufgelöste Farbinformation des Messpunktes lässt sich aus den Werten des zweiten wellenlängenselektiven, ortsauflösenden Empfängers ermitteln.

WO 2007/090865 A1 beschreibt ein Verfahren und eine Anordnung zur chromatisch-konfokalen Technik zur schnellen, dreidimensionalen Messung, insbesondere von Zähnen im Kiefer eines Menschen, mit einem Array von polychromatischen Punktlichtquellen, einer flächigen Detektormatrix, der Mittel zur lateralen spektralen Aufspaltung vorgeordnet sind, und einem Objektiv zur Objektbeleuchtung und -aufnahme. Es werden auf der Detektormatrix spektrale Referenzpunkte errechnet und mittels dieser Positionen werden Submatrizen zur spektralen Analyse von Objektlicht auf der Detektormatrix pixelgenau numerisch abgesteckt, welche dann zur Messpunktgewinnung dienen.

Darüber hinaus sind weitere Vorrichtungen zur Farbmessung aus dem Stand der Technik bekannt. Bei der Farbmessung wird das Messobjekt mit einem in seinem Spektrum tageslichtähnlichem Lichtstrahl bestrahlt und der zurückgestrahlte Lichtstrahl mittels eines Farbsensors, wie einer CCD- Kamera oder eines Spektrometers, aufgenommen und auf sein Spektrum hin analysiert. Aus diesem Spektrum kann dann der Farbton des Messobjekts bestimmt werden. In der Zahnmedizin wird die Farbmessung verwendet, um Zahnersatzteile farblich an natürliche Nachbarzähne anzupassen. Ein Nachteil solcher Vorrichtungen ist, dass sie entweder nur zur 3D-Vermessung oder nur zur Farbmessung geeignet sind. Insbesondere in der Zahnmedizin sind sowohl die Informationen aus der 3D-Vermessung als auch aus der Farbmessung zur Planung eines Zahnersatzteils erforderlich. Deshalb werden diese Informationen aufwendig unabhängig voneinander einerseits mittels bekannter 3D-Vemessungsvorrichtungen und andererseits mittels bekannter Farbmessungsvorrichtungen gewonnen.

Die Aufgabe dieser Erfindung besteht demnach darin, eine Vorrichtung bereitzustellen, die auf eine einfache Art und Weise sowohl eine 3D-Vermessung als auch eine Farbmessung eines Messobjekts ermöglicht.

### Darstellung der Erfindung

Diese Aufgabe wird durch die vorliegende Erfindung gelöst. Eine Ausführung der Erfindung umfasst eine Vorrichtung zur optischen 3D-Vermessung ein Objektiv, wobei die Vorrichtung zwischen einem ersten Modus für die optische 3D-Vermessung mittels der chromatischen konfokalen Messmethode und einem zweiten Modus für die Farbmessung verstellbar ist, indem mittels des Objektivs im ersten Modus ein breitbandiger Beleuchtungsstrahl auf eine erste Ebene einer Messobjektsoberfläche fokussierbar ist und im zweiten Modus der breitbandige Beleuchtungsstrahl mittels des Objektivs auf eine zweite Ebene außerhalb der ersten Ebene in einem Abstand d von der Messobjektsoberfläche fokussierbar ist.

Bei der 3D-Vermessung können die Oberflächeninformationen eines Messobjekts unter Verwendung unterschiedlicher Messmethoden, wie der chromatischen konfokalen Messmethode oder der Triangulation- Messmethode, erfasst werden. Ein breitbandiger Beleuchtungsstrahl wird dabei auf das Messobjekt gelenkt und das zurückgestrahlte Licht in Form eines Beobachtungsstrahls wird anschließend analysiert.

Bei der chromatisch konfokalen Meßmethode wird ein polychromatischer Beleuchtungsstrahl auf die Oberfläche eines Messobjekt fokussiert. Der Brechungswinkel bei Lichtbrechung ist abhängig von der Wellenlänge des gebrochenen Lichts, so dass kurzwelliges Licht auf einen zum Objektiv näheren Fokuspunkt und langwelliges Licht auf einem vom Objektiv fernen Fokuspunkt fokussiert wird. Ein schmaler Spektralbereich des Beleuchtungsstrahls wird genau auf die erste Ebene der Messobjektsoberfläche fokussiert, wobei die übrigen Spektralbereiche nur unscharf auf dem Messobjekt abgebildet werden und Unschärfekreise bilden. Der zurückgestrahlte Beleuchtungsstrahl bildet einen Beobachtungsstrahl, der von einem Strahlteiler in Richtung des Farbsensors umgelenkt wird. Eine zwischen dem Strahlteiler und dem Farbsensor konfokal angeordneten Blende führt dazu, dass der auf das Messobjekt fokussierte Spektralbereich des Beobachtungsstrahls die Blende durchstrahlt, wobei die übrigen auf der Messobjektsoberfläche unscharf abgebildeten Spektralbereiche herausgefiltert werden. Die Wellenlänge des fokussierten Spektralbereichs kann mittels einer Spektralanalyse bestimmt werden und daraus die absolute Position des Messobjekts in Richtung des Beleuchtungsstrahls abgeleitet werden.

Bei einer nicht beanspruchten Triangulation- Messmethode wird der Beleuchtungsstrahl auf das Messobjekt projiziert. Der zurückgestrahlte Beobachtungsstrahl wird dann mittels eines Bildsensors, wie beispielsweise einer CCD- Kamera, detektiert. Aus der Lage und Richtung des Beleuchtungsstrahls und des Beobachtungsstrahls kann unter Verwendung trigonometrischer Rechenmethoden der Abstand zum Messobjekt bestimmt werden. Bei dieser Messmethode wird der Beobachtungsstrahl ungefiltert vom Farbsensor detektiert, so dass keine konfokal angeordnete Blende verwendet wird.

Die Weißlichtinterferometrie- Messmethode nutzt die Interferenz eines breitbandigen Lichts, wie beispielsweise des Weißlicht. Diese ebenfalls nicht beanspruchte Messmethode vergleicht die Laufzeit des vom Messobjekt zurückgestrahlten Beobachtungsstrahls mittels eines Interferometers, beispielsweise eines Michelson-Interferometers, mit der Laufzeit des Beleuchtungsstrahls mit bekannter optischer Weglänge als Referenz. Die Interferenz der beiden Lichtstrahlen ergibt ein Muster, aus dem man die relative optische Weglänge abgeleitet werden kann.

Bei einer ebenfalls nicht beanspruchten Deflektometrie- Messmethode beobachtet man das Bild eines Lichtmusters, wie beispielsweise eines Gitters, in Reflexion über die Oberfläche des Messobjekts. Aus der Deformation des Gitterbildes kann man den lokalen Gradienten der Oberfläche bestimmen und daraus die 3D-Informationen des Messobjekts erzeugen. Dabei kann auch ein breitbandiger Lichtstrahl verwendet werden.

Bei den genannten optischen Messmethoden zur 3D-Vermessung tastet der breitbandige Beobachtungsstrahl innerhalb einer Messfläche das Messobjekt ab, um die Oberflächeninformationen dieser Messfläche zu erzeugen. Der breitbandige Beleuchtungsstrahl weist ein Spektrum auf, das vorteilhafterweise den sichtbaren Spektralbereich zwischen 400 nm und 800 nm umfasst. Der Beleuchtungsstrahl kann dabei ein oder mehrere punktförmige Lichtstrahlen, ein oder mehrere Lichtstreifen oder ein sonstiges Lichtmuster darstellen.

Bei Messmethoden zur Farbmessung wird oft ein polychromatischer Beleuchtungsstrahl auf das Messobjekt umgeleitet dessen Spektrum dem Tageslichtspektrum ähnlich ist und der eine Farbtemperatur zwischen 5000 K und 6000 K aufweist. Der zurückgestrahlte Beobachtungsstrahl wird anschließend mittels eines Farbsensors, wie einer CCD- Kamera oder eines Spektrometers, auf seinen Spektralverlauf hin analysiert. Anhand des aufgenommenen Spektrums kann dann auf den Farbeindruck für ein menschliches Auge geschlossen werden und dem Messobjekt ein Farbton zugeordnet werden.

Im ersten Modus wird der Beleuchtungsstrahl so fokussiert, dass zumindest das Licht einer Wellenlänge des polychromatischen Beleuchtungsstrahls seinen Fokuspunkt in der ersten Ebene der Messobjektsoberfläche hat und somit die Messobjektsoberfläche für diese Wellenlänge scharf auf dem Farbsensor abgebildet wird. Die Fokuspunkte für die übrigen Wellenlängen des polychromatischen Beleuchtungsstrahls liegen entweder oberhalb oder unterhalb der ersten Ebene der Messobjekts Oberfläche, so dass das Lichte dieser Wellenlängen unscharf auf dem Farbsensor abgebildet wird. Im zweiten Modus wird der Beleuchtungsstrahl auf eine zweite Ebene außerhalb der ersten Ebene der Messobjektsoberfläche fokussiert und bildet somit die Oberfläche unscharf ab. Der breitbandige Beleuchtungsstrahl wird demnach nicht auf einen Punkt, sondern auf einen ausgedehnten Unschärfekreis mit einem Durchmesser gebündelt und zwar sowohl für den Fall, dass der Fokuspunkt sich vor der ersten Ebene der Messobjektsoberfläche, als auch für den Fall, dass der Fokuspunkt sich hinter der ersten Ebene der Messobjektsoberfläche befindet. Der Beleuchtungsstrahl wird von der Messobjektsoberfläche innerhalb des Unschärfekreises als Beobachtungsstrahl zurückgestrahlt und kann zur Farbbestimmung verwendet werden.

Die Brennweite des Objektivs wird im ersten Modus so eingestellt, dass der Fokuspunkt für eine Wellenlänge in der ersten Ebene der Messobjektsoberfläche liegt. Im zweiten Modus wird die Brennweite so eingestellt, dass der Fokuspunkt für alle Wellenlängen außerhalb der ersten Ebene der Messobjektsoberfläche liegt. Zur Umschaltung zwischen dem ersten und dem zweiten Modus muss das optische System folglich nicht ausgetauscht werden, sondern lediglich in seiner Brennweite verstellt werden. Die Verstellung der Brennweite erfolgt durch ein Verdrehen eines Verstellmittels des Objektivs, das eine innere Mechanik des Objektivs verstellt, um die Brennweite zu ändern. Die Verstellung kann motorgesteuert oder auch manuell durch einen Benutzer erfolgen. Bei der chromatisch konfokalen Messmethode wird eine konfokale Blende vor dem Farbsensor angebracht, um ausschließlich das Licht des auf die Messobjektsoberfläche fokussierten Spektralbereichs durchzulassen. Falls im ersten Modus diese Messmethode verwendet wird, wird beim Umschalten aus dem ersten Modus in den zweiten Modus die Blende aus dem Strahlengang des Beobachtungsstrahls geschwenkt, um den Beobachtungsstrahl vollständig spektral analysieren zu können.

Ein Vorteil ist, dass sowohl die 3D-Vermessung als auch die Farbmessung mit der erfinderischen Vorrichtung durchgeführt werden kann. Dabei wird für beide Modi die selbe Lichtquelle und der selbe Farbsensor verwendet, die einen breitbandigen Beleuchtungsstrahl aussendet. Insbesondere in der Zahnmedizin wird somit die 3D-Vermessung und die Farbmessung von Zähnen im Rahmen einer Planung von Zahnersatz mit einer einzigen Vorrichtung ermöglicht.

Ein weiterer Vorteil ist, dass die Kostenbelastung und der Platzbedarf durch Vereinigung einer Vorrichtung zur Farbmessung und einer Vorrichtung zur 3D-Vermessung in der erfinderischen Vorrichtung mit beiden Modi verringert wird.

Vorteilhafterweise kann eine Blende im ersten Modus bei Verwendung der chromatischen konfokalen Messmethode konfokal zur Messobjektsoberfläche in den Strahlengang eines Beobachtungsstrahls hineinschwenkbar sein und im zweiten Modus aus dem Strahlengang des Beobachtungsstrahls herausschwenkbar sein.

Die Blende kann um eine Achse drehbar gelagert sein, um seitlich zum Strahlengang geschwenkt zu werden. Im ersten Modus bei Verwendung der chromatischen konfokalen Messmethode wird die Blende konfokal angeordnet, um die auf der Messobjektsoberfläche unscharf abgebildeten Spektralbereiche herauszufiltern. Bei de nicht beanspruchten Triangulation- Messmethode wird keine konfokal angeordnete Blende verwendet. Im zweiten Modus zur Farbmessung wird die Blende aus dem Strahlengang herausgeschwenkt, um das volle Spektrum des Beobachtungsstrahls mittels des Farbsensors aufzunehmen.

Vorteilhafterweise kann der Beleuchtungsstrahl zumindest innerhalb des sichtbaren Spektralbereichs zwischen 400 nm und 700 nm ein Spektrum aufweisen, das dem Tageslichtspektrum ähnlich ist.

Ein solcher Beleuchtungsstrahl weist folglich den optischen Eindruck vom Tageslicht auf.

Dadurch wird die Farbmessung im zweiten Modus mit einem Beleuchtungsstrahl durchgeführt, der die Beleuchtung des Messobjekts bei Tageslicht simuliert. Bei der Farbmessung wird also dar vom Messobjekt zurückgestrahlte Beobachtungsstrahl analysiert und dessen Farbton bestimmt, der einem optischen Eindruck des Messobjekts bei Tageslicht entspricht. Im ersten Modus zur 3D-Vermessung und im zweiten Modus kann die selbe Lichtquelle mit tageslichtähnlichem Spektrum bei einer Farbtemperatur zwischen 5000 und 6000 K verwendet werden.

Vorteilhafterweise kann mittels einer umschaltbaren Lichtquelle im ersten Modus ein Beleuchtungsstrahl mit einem breitbandigen Spektrum und im zweiten Modus ein Beleuchtungsstrahl mit einem tageslichtähnlichem Spektrum erzeugbar sein.

Bei einer umschaltbaren Lichtquelle kann im ersten Modus eine weiße Lichtquelle mit einem breiten Spektrum und im zweiten Modus eine andere Lichtquelle mit einem tageslichtähnlichem Spektrum verwendet werden. Beim Umschalten zwischen den beiden Modi wird entweder die Lichtquelle ausgetauscht oder das Spektrum der Lichtquelle wird entsprechend verändert. Beispielsweise können mehrere farbige LED's so angesteuert werden, dass durch Überlagerung ihrer Spektren entweder ein tageslichtähnliches Spektrum oder ein breitbandiges weißes Spektrum erzeugt wird. Für die Wirkungsweise der chromatisch konfokalen Messmethode ist der Intensitätsverlauf des breitbandigen Spektrums in Abhängigkeit von der Wellenlänge unwesentlich, so dass das breitbandige Spektrum mehrere Maxima und Minima bei verschiedenen Wellenlängen aufweisen kann.

Bei einer weiteren Ausführung der Erfindung ist mittels eines Schwenkmechanismus ein erstes Objektiv zum Betreiben im ersten Modus und ein zweites Objektiv zum Betreiben im zweiten Modus in den Strahlengang des Beleuchtungsstrahls schwenkbar.

Die Brennweite des ersten Objektivs ist so bemessen, dass der Beleuchtungsstrahl auf die erste Ebene der Messobjektsoberfläche fokussiert wird und die Brennweite des zweiten Objektivs ist so bemessen, dass der Beleuchtungsstrahl auf eine zweite Ebene außerhalb der ersten Ebene der Messobjektsoberfläche fokussiert wird. Beim Umschalten zwischen den beiden Modi wird das entsprechende Objektiv mittels eines Schwenkmechanismus in den Strahlengang des Beleuchtungsstrahls geschwenkt. Dadurch bleibt der übrige optische Aufbau der Vorrichtung unverändert und der Schwenkmechanismus kann beispielsweise mittels eines Auslösers, wie eines Drehknopfes oder Steuerhebels zwischen den beiden Modi verstellt werden. Die Verstellung kann motorgesteuert oder manuell durch den Benutzer erfolgen.

Bei einer weiteren Ausführung der Erfindung ist zum Betreiben im ersten Modus ein erste Objektiv und zum Betreiben im zweiten Modus ein zweites Objektiv durch einen Benutzer in den Strahlengang des Beleuchtungsstrahls einbringbar.

In der Vorrichtung können Befestigungsmittel, wie beispielsweise flexible Spannklammern, angebracht sein, die ein genaues Positionieren des Objektivs im Strahlengang des Beleuchtungsstrahls ermöglichen. Dadurch kann der Benutzer durch das Austauschen der Objektive den Modus der Vorrichtung wechseln. Ein Vorteil ist, dass im Gehäuse der Vorrichtung in jedem der beiden Modi jeweils nur ein Objektiv mit starrer Brennweite Raum finden muss, so dass die Vorrichtung kleiner in ihren Ausmaßen konstruiert werden kann.

In einer weiteren Ausführung besteht die Vorrichtung aus einer Basiseinheit und einem Handstück, die miteinander über einen Lichtleiter verbunden sind, wobei die Basiseinheit eine Lichtquelle, einen Strahlteiler und einen Farbsensor umfasst und das Handstück das Objektiv umfasst.

Die Basiseinheit der Vorrichtung ist ein festinstallierter Aufbau. Die Lichtquelle in der Basiseinheit strahlt einen Beleuchtungsstrahl mit polychromatischem Spektrum aus, das dem Spektrum von Tageslicht entspricht oder möglichst ähnlich ist. Der Beleuchtungsstrahl passiert des Strahlteiler und wird über den Lichtleiter an das Handstück geleitet. Im Handstück wird der Beleuchtungsstrahl mittels des Objektivs im ersten Modus auf die erste Ebene der Messobjektsoberfläche und im zweiten Modus auf eine zweite Ebene außerhalb der ersten Ebene der Messobjektsoberfläche fokussiert. Der vom Messobjekt zurückgestrahlte Beobachtungsstrahl gelangt über den Lichtleiter zurück in der Basiseinheit und wird mittels des Strahlteilers zum Farbsensor umgelenkt. Die Bilddaten des Farbsensors können dann zur Bildanalyse an eine Bildanalyseeinheit über ein Datenkabel oder der Funk übermittelt werden.

Dadurch kann das Handstück unabhängig von der Basiseinheit bewegt werden und verbessert somit den Bedienkomfort. Darüber hinaus kann das Handstück in seinen Ausmaßen schmal konstruiert werden, da es nur das Objektiv und eventuell Umlenkspiegel enthält und die übrigen optischen Bauteile wie Lichtquelle, Strahlteiler und Farbsensor in der Basiseinheit eingebaut sind. Insbesondere bei der Anwendung der Vorrichtung zu zahnmedizinischen Zwecken wird dadurch der Zugang zu Messobjekten wie Zähnen in der Mundhöhle eines Patienten erleichtert.

Zum Betreiben im ersten Modus ist das erste Handstück mit dem ersten Objektiv und zum Betreiben im zweiten Modus ein zweites Handstück mit dem zweiten Objektiv durch einen Benutzer mit der Basiseinheit verbindbar.

Durch den Austausch der Handstücke wechselt somit der Modus der Vorrichtung. Im zweiten Modus bleibt der Beleuchtungsstrahl in seiner Ausrichtung relativ zum Handstück unverändert, wobei im ersten Modus der Beleuchtungsstrahl eine oszillierende Abtastbewegung zur optischen Abtastung eines Messfeldes vollführt. Diese Abtastbewegung kann beispielsweise durch einen Drehspiegel erzeugt werden, der entsprechend geschwenkt wird. Das zweite Handstück kann kompakter als das erste Handstück konstruiert werden, da im ersten Modus kein Mechanismus, wie ein Drehspiegel, zur Erzeugung einer Abtastbewegung erforderlich ist.

Vorteilhafterweise kann die einteilige Vorrichtung, umfassend eine Lichtquelle, einen Strahlteiler, einen Farbsensor, ein Objektiv, mit einem Gehäuse verkleidet sein.

Die Vorrichtung kann einteilig konstruiert werden, indem alle Bauteile in einem Gehäuse angebracht werden. Ein Datenkabel verbindet dann die Vorrichtung mit einer Bildanalyseeinheit, um die Daten des Farbsensors zu analysieren. Im Vergleich mit der zweiteiligen Ausführungsform aus dem Handstück und der Basiseinheit wird der flexible Leichtleiter eingespart.

Im zweiten Modus ist zur Farbmessung die Brennweite des Objektivs so gewählt, dass der Beleuchtungsstrahl auf eine zweite Ebene außerhalb der ersten Ebene der Messobjektsoberfläche fokussiert wird und der Beleuchtungsstrahl als ein Messfeld in der Form eines Unschärfekreises mit homogener Intensität unscharf auf der Messobjektsoberfläche abgebildet wird.

Dadurch wird ein Messfeld mit homogener Intensität und einem tageslichtähnlichem Spektrum bereitgestellt, das zur Farbmessung notwendig ist.

Vorteilhafterweise kann der Beleuchtungsstrahl aus mehreren Teilstrahlen bestehen, die in einer Ebene parallel zueinander verlaufen.

Bei mehreren Teilstrahlen werden auch mehrere Objektive verwendet, um die Teilstrahlen in gewünschter Weise zu fokussieren.

Dadurch kann im ersten Modus die Zeitdauer der 3D-Vermessung erheblich verkürzt werden, da die Teilstrahlen parallel mit einer gleichzeitigen Abtastbewegung die Messobjektsoberfläche erfassen. Im zweiten Modus bilden die einzelnen Teilstrahlen mehrere Unschärfekreise auf der Messobjektsoberfläche ab, die sich zu einem streifenförmigen Messfeld überlagern. Dieses Messfeld weist einen tageslichtähnliches Spektrum und eine homogene Intensitätsverteilung auf, so dass dieses Messfeld zur Farbmessung geeignet ist.

Vorteilhafterweise können mittels des Objektivs, umfassend mehrere Teilobjektive, die einzelnen Teilstrahlen im ersten Modus auf Fokuspunkte fokussiert werden, die in einer Reihe auf der ersten Ebene der Messobjektsoberfläche angeordnet sind. Im zweiten Modus können die einzelnen Teilstrahlen auf Fokuspunkte fokussiert werden, die in einer Reihe auf der zweiten Ebene außerhalb der ersten Ebene angeordnet sind, so dass die Teilstrahlen unscharf in Form von Unschärfekreisen auf der Messobjektsoberfläche abgebildet werden und sich zu einem Messfeld überlagern.

Das erste Objektiv umfasst mehrere Teilobjektive für die einzelnen Teilstrahlen, deren Steuerung der Brennweite aneinander mittels eines Kopplungsmechanismus gekoppelt ist, so dass die Brennweite aller Teilobjektive synchron verstellt wird. Dadurch können die Fokuspunkte der einzelnen Teilstrahlen durch einen Benutzer in gewünschter Weise gleichzeitig verschoben werden.

Vorteilhafterweise kann die Vorrichtung einen Umlenkspiegel aufweisen, der den Beleuchtungsstrahl auf das Messobjekt umlenkt.

Der Beleuchtungsstrahl kann beispielsweise im rechten Winkel auf das Messobjekt umgelenkt werden. Dadurch wird insbesondere die Aufnahme von Zähnen in der Mundhöhle eines Patienten erleichtert.

Vorteilhafterweise kann bei Verwendung einer chromatisch konfokalen Messmethode die Vorrichtung eine Blende zwischen dem Objektiv und dem Farbsensor aufweisen, um nur denjenigen Spektralbereich eines vom Objekts zurückgestrahlten Beobachtungsstrahls zum Farbsensor durchzulassen, der auf die erste Ebene der Messobjektsoberfläche fokussiert ist.

Die konfokal angeordnete Blende ist ein wesentliches Element der chromatisch konfokale Messmethode. Aus der Wellenlänge des herausgefilterten Spektralbereichs wird anschließend die absolute Position der Messobjektsoberfläche in der Richtung des Beleuchtungsstrahls bestimmt. Die übrigen beiden Koordinaten der Position in senkrechter Richtung zum Beleuchtungsstrahl werden aus den Bilddaten des Farbsensors bestimmt.

Vorteilhafterweise kann der Durchmesser der Blende im ersten Modus zur 3D-Vermessung mittels der chromatischen konfokalen Messmethode größer als der Durchmesser der Blende im zweiten Modus zur Farbmessung sein, so dass die Tiefenschärfe im ersten Modus geringer als die Tiefenschärfe im zweiten Modus ist.

Im ersten Modus ist der Durchmesser der Blende größer und die Tiefenschärfe somit geringen, so dass der Beobachtungsstrahl scharf auf dem Farbsensor abgebildet wird und mittels der chromatischen konfokalen Messmethode aus der scharf fokussierten Wellenlänge die Messtiefe berechnet werden kann. Im zweiten Modus ist der Durchmesser der Blende kleiner und die Tiefenschärfe somit größer, so dass alle Wellenlängen nahezu scharf abgebildet werden und sich zu einem weißen Lichtfeld überlagern, wobei keine der Wellenlängen dominiert. Dieses weiße Lichtfeld wird vom Farbsensor detektiert und die Bilddaten zur Farbmessung verwendet.

Vorteilhafterweise kann die Blende steuerbar sein und der Durchmesser der Blende verstellbar sein.

Die Blende kann eine Irisblende sein, deren Durchmesser durch Verdrehen eines äußeren Rings der Irisblende verstellt werden kann.

Vorteilhafterweise kann die Blende mit einem größeren Durchmesser im ersten Modus gegen eine Blende mit einem kleineren Durchmesser im zweiten Modus ausgetauscht werden.

Die erste Blende mit einem größeren Durchmesser im ersten Modus kann unter Verwendung eines mechanischen mittels gegen die zweite Blende mit einem kleineren Durchmesser im zweiten Modus ausgetauscht werden.

Vorteilhafterweise kann die Tiefenschärfe der Vorrichtung im ersten Modus zwischen 0,1 mm und 1 mm betragen und die Tiefenschärfe der Vorrichtung im zweiten Modus zwischen 5 mm und 30 mm betragen.

Der Bereich der Tiefenschärfe im ersten Modus zwischen 0,1 mm und 1 mm ist besonders geeignet um die Koordinate der Messobjekts Oberfläche mittels der chromatischen konfokalen Messmethode festzustellen. Der Bereich der Tiefenschärfe im zweiten Modus zur Farbmessung zwischen 5 mm und 30 mm ist besonders vorteilhaft, da das auf das Objekt, beispielsweise einen Zahn von etwa 20 mm Höhe, projizierte Lichtfeld eine homogene intensiviert Verteilung und ein weißes, vorteilhafterweise tageslichtähnliches, Spektrum aufweisen muss. Außerhalb des Tiefenschärfebereichs dominieren diejenigen Wellenlängen, die scharf abgebildet werden.

Vorteilhafterweise kann die Lichtquelle in ihrer Intensität so verstellbar sein, dass im zweiten Modus der Abfall der Lichtmenge durch einen kleineren Durchmesser der Blende mit einem Anstieg der Intensität der Lichtquelle kompensiert werden kann, um eine Farbmessung zu ermöglichen.

Für die Farbmessung ist eine bestimmte Intensität des detektierten Beobachtungsstrahls notwendig. Die Intensität der Lichtquelle wird erhöht, um die geringere Lichtmenge durch einen kleineren Durchmesser der Blende zu kompensieren und um die notwendige Intensität des Lichtfeldes zu erreichen.

Vorteilhafterweise kann zwischen dem Objektiv und dem Messobjekt ein chromatisches Objektiv angeordnet sein, wobei das chromatische Objektiv im ersten Modus für die optische 3D-Vermessung mittels der chromatischen konfokalen Messmethode in den Strahlengang des Beleuchtungsstrahls eingebracht ist und im zweiten Modus für die Farbmessung aus dem Strahlengang des Beleuchtungsstrahls herausgeschwenkt ist.

Das chromatische Objektiv verstärkt den Effekt der chromatischen Abberationen, so dass die Fokuspunkte für die unterschiedlichen Wellenlängen deutlich auseinandergezogen werden. Dadurch dominiert im Beobachtungsstrahl 18 jeweils diejenige Wellenlänge, deren Fokuspunkt gerade auf der Messobjektsoberfläche 16 liegt. Die Fokuspunkte für eine Wellenlänge von 400 nm und eine Wellenlänge von 800 nm für ein tageslichtähnliches Spektrum können 30 mm auseinander liegen. Damit wird die Höhe eines Objekts, wie eines Zahns; abgedeckt. Im zweiten Modus wird das chromatische Objektiv um eine Schwenkachse aus dem Beleuchtungsstrahl herausgeschwenkt, so dass die Fokuspunkte der unterschiedlichen Wellenlängen zusammenrücken und sich nahezu überlagern. Die überlagerten Wellenlängen bilden somit ein homogenes weißes Lichtfeld mit einem tageslichtähnlichen Spektrum.

Vorteilhafterweise kann das chromatische Objektiv Bestandteil des Objektivs sein.

Das chromatische Objektiv kann zusammen mit dem Objektiv als eine gemeinsame optische Einheit in einem Gehäuse angeordnet sein.

Vorteilhafterweise kann das chromatische Objektiv um eine Schwenkachse aus dem Strahlengang des Beobachtungsstrahls herausschwenkbar sein.

Das chromatische Objektiv kann getrennt vom Objektiv um die Schwenkachse schwenkbar angeordnet sein. Die Schwenkbewegung kann mechanisch durch ein elektronisch angesteuertes Schwenkmittel erzeugt werden.

Vorteilhafterweise kann die Vorrichtung schmal und bogenförmig geformt sein, um eine 3D-Vermessung von Zähnen innerhalb einer Mundhöhle eines Patienten und zur Farbmessung von Zahnoberflächen zu ermöglichen.

Die erfinderische Vorrichtung kann insbesondere als zahnmedizinische Vorrichtung zur 3D-Vermessung und Farbmessung von Zähnen verwendet werden. Die Ergebnisse dieser Messungen, wie die 3D-Daten von Zahnoberflächen und vom Zahnfleisch und der Farbton der Zahnoberflächen, können anschließend zur Planung von Zahnersatzteilen verwendet werden.

Ein weiterer Gegenstand der Erfindung ist ein Verfahren zur optischen 3D-Vermessung und zur Farbmessung, wobei eine Vorrichtung zwischen einem ersten Modus für die optische 3D-Vermessung mittels der chromatischen konfokalen Messmethode und einem zweiten Modus für die Farbmessung verstellt wird. Im ersten Modus wird ein breitbandiger Beleuchtungsstrahl auf eine erste Ebene einer Messobjektsoberfläche fokussiert und im zweiten Modus wird der breitbandige Beleuchtungsstrahl auf eine zweite Ebene außerhalb der ersten Ebene in einem Abstand d von der Messobjektsoberfläche fokussiert.

Im zweiten Modus wird der Beleuchtungsstrahl unscharf auf der Messobjektsoberfläche abgebildet, so dass ein Unschärfekreis erzeugt wird, der zur Farbmessung geeignet ist.

Als optisches System zur Fokussierung des Beleuchtungsstrahls kann ein Objektiv verwendet werden. Seine Brennweite wird so verstellt, dass der Beobachtungsstrahl im ersten Modus auf die erste Ebene in der Messobjektsoberfläche fokussiert wird und im zweiten Modus auf die zweite Ebene fokussiert wird.

Ein Vorteil des erfinderischen Verfahrens ist, dass der selbe Beleuchtungsstrahl für beide Modi verwendet wird und die Umschaltung zwischen den Modi durch Verstellung der Brennweite eines optischen Systems, wie beispielsweise eines Objektivs, bis zum Fokuspunkt erfolgt.

Vorteilhafterweise kann eine Blende im ersten Modus bei Verwendung der chromatischen konfokalen Messmethode konfokal zur Messeobjektsoberfläche in den Strahlengang eines Beobachtungsstrahls hineingeschwenkt werden und im zweiten Modus aus dem Strahlengang des Beobachtungsstrahls herausgeschwenkt werden.

Im ersten Modus ist die konfokal angeordnete Blende ein notwendige Voraussetzung zur Verwendung der chromatisch konfokalen Messmethode. Im zweiten Modus wird die Blende herausgeschwenkt, da sie sonst den Beobachtungsstrahl unnötig einengen würde.

Vorteilhafterweise kann mittels einer umschaltbaren Lichtquelle im ersten Modus ein Beleuchtungsstrahl mit einem breitbandigen Spektrum und im zweiten Modus ein Beleuchtungsstrahl mit einem tageslichtähnlichem Spektrum erzeugt werden.

Dadurch kann beim Umschalten der Lichtquelle das Spektrum entsprechend dem jeweiligen Modus verändert werden. Das Spektrum zur 3D-Vermessung kann auch aus mehreren einzelnen Spektralbereichen mit verschiedenen Wellenlängen zwischen 400 nm und 700 nm bestehen.

Vorteilhafterweise kann bei der Verstellung der Vorrichtung vom ersten Modus in den zweiten Modus mittels eines Schwenkmechanismus das erste Objektiv aus dem Strahlengang des Beleuchtungsstrahls herausgeschwenkt und ein zweites Objektiv in den Strahlengang des Beleuchtungsstrahls hineingeschwenkt werden.

Dadurch erfolgt die Umschaltung vom ersten in den zweiten Modus durch Austausch des ersten Objektivs gegen das zweite Objektiv, wobei beide Objektive an einem Schwenkmechanismus innerhalb eines Gehäuses der Vorrichtung angebracht sind.

Vorteilhafterweise kann bei der Verstellung der Vorrichtung vom zweiten Modus in den ersten Modus mittels des Schwenkmechanismus das zweite Objektiv aus dem Strahlengang des Beleuchtungsstrahls herausgeschwenkt und ein erste Objektiv in den Strahlengang des Beleuchtungsstrahls hineingeschwenkt wird.

Dadurch erfolgt die Umschaltung vom zweiten in den ersten Modus durch Austausch des zweiten Objektivs gegen das erste Objektiv mittels des Schwenkmechanismus.

Vorteilhafterweise kann bei der Verstellung der Vorrichtung vom ersten Modus in den zweiten Modus durch einen Benutzer das erste Objektiv aus dem Strahlengang des Beleuchtungsstrahls herausgenommen und ein zweites Objektiv in den Strahlengang des Beleuchtungsstrahls eingesetzt wird.

Dadurch erfolgt die Umschaltung vom ersten in den zweiten Modus durch Austausch des ersten Objektivs gegen das zweite Objektiv manuell durch einen Benutzer. Zur präzisen Befestigung des Objektivs im Strahlengang ist eine Einspannvorrichtung, wie eine Einspannklammer, erforderlich.

Vorteilhafterweise kann bei der Verstellung der Vorrichtung vom zweiten Modus in den ersten Modus durch einen Benutzer das zweite Objektiv aus dem Strahlengang des Beleuchtungsstrahls herausgenommen und das erste Objektiv in den Strahlengang des Beleuchtungsstrahls eingesetzt wird.

Dadurch erfolgt die Umschaltung vom zweiten in den ersten Modus durch Austausch des zweiten Objektivs gegen das erste Objektiv manuell durch einen Benutzer.

Falls die Vorrichtung aus einer Basiseinheit und einem Handstück besteht, kann vorteilhafterweise im ersten Modus das erste Handstück mit dem ersten Objektiv und zum Betreiben im zweiten Modus ein zweites Handstück mit dem zweiten Objektiv durch einen Benutzer mit der Basiseinheit verbunden werden.

Dadurch erfolgt die Umschaltung zwischen den beiden Modi durch Anschließen eines ersten bzw. zweiten Handstücks mit einem ersten bzw. zweiten Objektiv, die die entsprechende Brennweite aufweisen.

Im zweiten Modus wird zur Farbmessung der Beleuchtungsstrahl auf die zweite Ebene außerhalb der ersten Ebene der Messobjektsoberfläche so fokussiert , dass der Beleuchtungsstrahl als ein Messfeld in der Form eines Unschärfekreises mit homogener Intensität und einem tageslichtähnlichem Spektrum auf der Messobjektsoberfläche abgebildet wird.

Ein Unschärfekreis mit homogener Intensität und einem tageslichtähnlichem Spektrum, der durch eine unscharfe Abbildung des Beleuchtungsstrahls auf der Messobjektsoberfläche erzeugt wird, ist als Messfeld zur Farbmessung besonders geeignet.

Falls der Beleuchtungsstrahl aus mehreren Teilstrahlen besteht, können die einzelnen Teilstrahlen vorteilhafterweise im ersten Modus auf Fokuspunkte fokussiert werden, die in einer Reihe in der ersten Ebene der Messobjektsoberfläche angeordnet sind, und im zweiten Modus auf eine zweite Ebene außerhalb der ersten Ebene der Messobjektsoberfläche fokussiert werden, so dass die Teilstrahlen unscharf auf der Messobjektsoberfläche abgebildet werden und sich zu einem Messfeld mit nahezu homogener Intensität überlagern.

Vorteilhafterweise kann bei Verwendung einer chromatisch konfokalen Messmethode mittels einer Blende zwischen dem Objektiv und dem Farbsensor nur denjenigen Spektralanteil eines vom Objekt zurückgestrahlten Beobachtungsstrahls zum Farbsensor durchgelassen, der auf die erste Ebene der Messobjektsoberfläche fokussiert wird.

Vorteilhafterweise kann der Durchmesser der Blende im ersten Modus zur 3D-Vermessung mittels der chromatischen konfokalen Messmethode größer als der Durchmesser der Blende im zweiten Modus zur Farbmessung mittels eines Blendenmittels eingestellt wird, so dass die Tiefenschärfe im ersten Modus geringer als die Tiefenschärfe im zweiten Modus ist.

Vorteilhafterweise kann die Blende elektronisch gesteuert werden und der Durchmesser der Blende kann verstellt werden.

Vorteilhafterweise kann die Blende mit einem größeren Durchmesser im ersten Modus gegen eine Blende mit einem kleineren Durchmesser im zweiten Modus ausgetauscht werden.

Vorteilhafterweise kann die Tiefenschärfe im ersten Modus in einem Bereich zwischen 0,1 mm und 1 mm und die Tiefenschärfe im zweiten Modus in einem Bereich zwischen 5 mm und 30 mm eingestellt werden.

Vorteilhafterweise kann die Lichtquelle in ihrer Intensität so verstellt werden, dass im zweiten Modus der Abfall der Lichtmenge durch einen kleineren Durchmesser der Blende mit einem Anstieg der Intensität der Lichtquelle kompensiert wird, um eine Farbmessung zu ermöglichen.

Vorteilhafterweise kann zwischen dem Objektiv und dem Messobjekt ein chromatisches Objektiv angeordnet sein, wobei das chromatische Objektiv im ersten Modus für die optische 3D-Vermessung mittels der chromatischen konfokalen Messmethode in den Strahlengang des Beleuchtungsstrahls eingebracht wird und im zweiten Modus für die Farbmessung aus dem Strahlengang des Beleuchtungsstrahls herausgeschwenkt wird.

Vorteilhafterweise kann das chromatische Objektiv im zweiten Modus aus dem Strahlengang des Beobachtungsstrahls herausgeschwenkt werden.

Die Erfindung wird in den unabhängigen Ansprüchen definiert.

### Kurzbeschreibung der Zeichnungen

Ausführungsbeispiele der Erfindung sind in der Zeichnung dargestellt. Es zeigt die
- Fig. 1: die Vorrichtung zur optischen 3D-Vermessung und zur Farbmessung, bestehend aus einer Basiseinheit und einem Handstück die über einen Lichtleiter verbunden sind, die
- Fig. 2: die Vorrichtung aus Fig. 1 im zweiten Modus zur Farbmessung, die
- Fig. 3: die Vorrichtung aus Fig. 1 im ersten Modus mit einem Schwenkmechanismus, die
- Fig. 4: die Vorrichtung aus Fig. 1 im zweiten Modus zur Farbmessung mit einem austauschbaren Objektiv, die
- Fig. 5: die Vorrichtung aus Fig. 1 im ersten Modus zur 3D-Vermessung in einteiliger Ausführungsform, die
- Fig. 6: ein zweites Handstück zur Farbmessung als ein Element einer weiteren Ausführungsform der Vorrichtung 1 aus Fig. 1, die
- Fig. 7: die Vorrichtung 1 aus Fig. 1 mit einem Beleuchtungsstrahl bestehend aus drei Teilstrahlen, die
- Fig. 8: eine schematische Darstellung der chromatisch konfokalen Messmethode.

### Ausführungsbeispiele der Erfindung

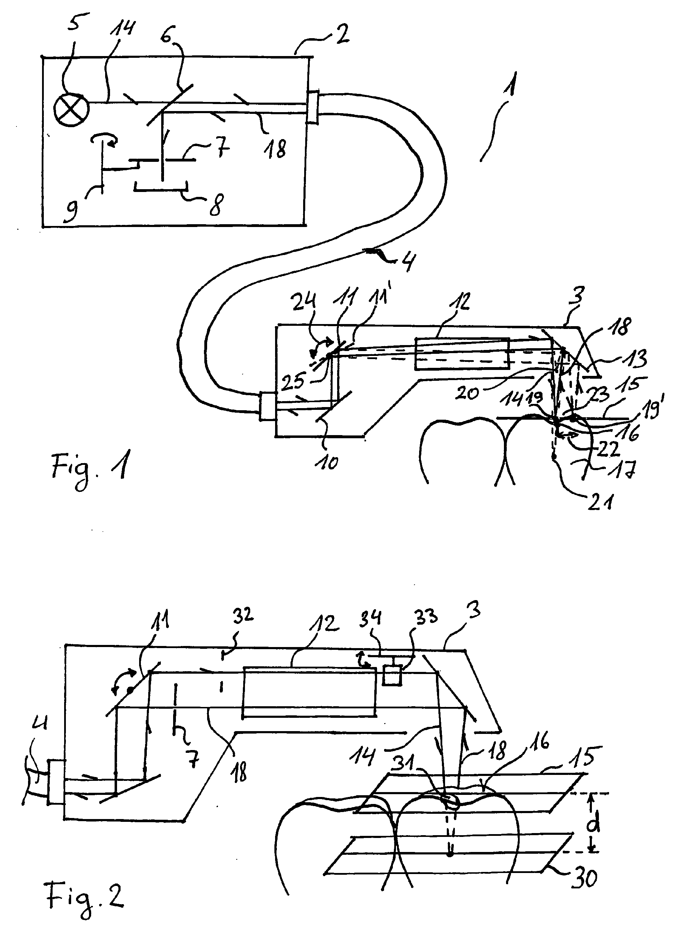

Die Fig. 1 zeigt die erfinderische Vorrichtung 1 zur optischen 3D-Vermessung und zur Farbmessung, bestehend aus einer Basiseinheit 2 und einem Handstück 3 die über einen Lichtleiter 4 verbunden sind. Die Basiseinheit 2 umfasst eine Lichtquelle 5, einen Strahlteiler 6 eine Blende 7 und einen Farbsensor 8. Die Blende 7 ist um eine Achse 9 drehbar gelagert und kann seitlich geschwenkt werden. Das Handstück 3 umfasst einen ersten fest eingebauten Umlenkspiegel 10 einen Drehspiegel 11, ein Objektiv 12 und einen dritten Umlenkspiegel 13. Die Lichtquelle 5 sendet einen Beleuchtungsstrahl 14 aus, der den teiltransparenten Strahlteiler 6 passiert, mittels des Lichtleiters 4 zum Handstück 3 umgeleitet wird, dort vom ersten Umlenkspiegel 10 zum Drehspiegel 11 umgelenkt wird, vom Drehspiegel 11 in Richtung des dritten Drehspiegels 13 umgelenkt wird, mittels des Objektivs 12 auf eine erste Ebene 15 einer Messobjektoberfläche 16 fokussiert wird und vom dritten Umlenkspiegel 13 zum Messobjekt 17 umgelenkt wird. Im vorliegenden Fall ist das Messobjekt 17 mit der Messobjektsoberfläche 16 ein Zahn in der Mundhöhle eines Patienten mit einer zu vermessenden Zahnoberfläche 16. Der Beleuchtungsstrahl 14 wird von der Zahnoberfläche 16 als ein Beobachtungsstrahl 18 zurückgestrahlt. Der Beleuchtungsstrahl 14 weist ein tageslichtähnliches Spektrum auf, wobei die Intensitätsverteilung über den Querschnitt des Beleuchtungsstrahls 14 homogen ist. Der Beobachtungsstrahl wird vom dritten Umlenkspiegel 13 in Richtung des Drehspiegels 11 umgelenkt, mittels des Objektivs 12 aufgeweitet, vom Drehspiegel 11 zum ersten Umlenkspiegel 10 umgelenkt, durch den Lichtleiter zurück zur Basiseinheit 2 geführt und dort vom Strahlteiler 6 in Richtung des Farbsensors 8 umgeleitet. Die Vorrichtung 1 ist im ersten Modus zur optischen 3D-Vermessung dargestellt. Im vorliegenden Ausführungsbeispiel wird als Messmethode der optischen 3D-Vermessung die chromatisch konfokale Messmethode verwendet. Bei der chromatisch konfokalen Messmethode wird der Beleuchtungsstrahl 14 auf die erste Ebene 15 der Messobjektsoberfläche 16 fokussiert und der Beobachtungsstrahl 18 passiert zwischen dem Strahlteiler 6 und dem Farbsensor 8 die Blende 7. Die Blende 7 ist konfokal zum Fokuspunkt 19 angeordnet. Bei einer optischen Brechung ist der Brechungswinkel abhängig von der Wellenlänge des gebrochenen Lichts. Daher wird der kurzwelligere Spektralbereich des Beleuchtungsstrahls 14 näher zum dritten Umlenkspiegel 13 auf einen Fokuspunkt 20 und der langwellige Spektralbereich des Beleuchtungsstrahls 14 wird auf einen Fokuspunkt 21 fokussiert, der weiter weg vom dritten Umlenkspiegel 13 ist. Zwischen den Fokuspunkten 20 und 21 befindet sich der Fokuspunkt 19 auf den ein schmaler Spektralbereich des Beleuchtungsstrahls 14 fokussiert wird. Nur dieser schmale Spektralbereich wird genau auf die Messobjektsoberfläche 16 fokussiert und passiert als Spektralbereich des Beobachtungsstrahls 18 die Blende 7. Die übrigen Spektralbereiche des Beobachtungsstrahls 18 werden durch die Blende 7 herausgefiltert, da sie unscharf auf der Messobjektsoberfläche 16 abgebildet werden. Aus der Wellenlänge des schmalen Spektralbereichs, der vom Farbsensor 8 detektiert wird kann dann die absolute Position der Messobjektsoberfläche 16 in Richtung des Beleuchtungsstrahls 14 bestimmt werden. Die Messobjektsinformationen in Richtung der beiden übrigen Koordinaten in senkrechter Richtung zum Beleuchtungsstrahl 14 können aus den Bilddaten des Farbsensors 8 direkt bestimmt werden. Der Beleuchtungsstrahl 14 vollführt eine oszillierende Abtastbewegung 22 innerhalb der Grenzen eines Messfeldes 23, dass durch die Positionen des Fokuspunktes 19 und des Fokuspunktes 19' gegeben sind. Die Abtastbewegung 22 wird durch die Schwenkbewegung 24 des Drehspiegels 11 um eine Achse 25 erzeugt. Die absolute Position der Zahnoberfläche 16 wird also dadurch bestimmt, dass abhängig von der Lage des Fokuspunktes innerhalb der Grenzen 19 und 19' des Messfeldes 22 jeweils ein schmalbandiger Spektralbereich mit abweichender Wellenlänge auf der Zahnoberfläche 16 fokussiert wird, mittels der Blende 7 herausgefiltert wird und mittels des Farbsensors 8 gemessen wird. Aus der Differenz der Wellenlängen der jeweiligen Spektralbereichen an unterschiedlichen Messpunkten kann dann auf die absolute Position in Richtung des Beleuchtungsstrahls 14 geschlossen werden. Der Drehspiegel 11 ist gestrichelt in der Position 11' nach der Schwenkbewegung 24 dargestellt, der den durch das Objektiv 12 fokussierten Beleuchtungsstrahl 14 auf den Fokuspunkt 19' umlenkt. Die konfokal angeordnete Blende 7 wird nur für die chromatisch konfokale Messmethode verwendet und kann für einen zweiten Modus zur Farbmessung aus dem Strahlengang des Beobachtungsstrahls 18 herausgeschwenkt werden, indem die Blende um die Achse 9 gedreht wird.

Die Fig. 2 zeigt die Vorrichtung 1 aus Fig. 1 im zweiten Modus zur Farbmessung. Die Basiseinheit 2 ist nicht dargestellt, da sie im Vergleich zu Fig. 1 unverändert bleibt, wobei die Blende 7 aus dem Strahlengang des Beobachtungsstrahls 18 herausgeschwenkt wird. Das Handstück 3 ist über den Lichtleiter 4 mit der Basiseinheit 2 verbunden. Das Handstück 3 aus Fig. 1 wurde in den zweiten Modus umgeschaltet, indem die Brennweite des Objektives 12 so verändert wurde, dass der Beleuchtungsstrahl 14 auf eine zweite Ebene 30 fokussiert wird. Die zweite Ebene 30 ist parallel zu der ersten Ebene 15 der Messobjektsoberfläche 16 angeordnet und weist zu dieser einen Abstand d auf. Der Beleuchtungsstrahl 14 wird somit unscharf auf der Messobjektsoberfläche abgebildet und erzeugt ein Messfeld in der Form eines Unschärfekreises 31. Dieser Unschärfekreis weist eine homogene Intensität und ein tageslichtähnliches Spektrum auf, sodass er als Messfeld zur Farbmessung besonders geeignet ist. Der zurückgestrahlte Beobachtungsstrahl 18 wird zum Farbsensor 8 der Basiseinheit 2 aus Fig. 1 umgeleitet und auf sein Spektrum hin untersucht. Anhand des Spektrums des Beobachtungsstrahls 18 wird der Farbton der Messobjektsoberfläche 16, die im vorliegenden Fall eine Zahnoberfläche ist, bestimmt. Eine Farbmessung einer Zahnoberfläche wird insbesondere bei Planung eines Zahnersatzteils durchgeführt, um die Farbäquivalenz des Farbersatzteils zu den umgebenden Zähnen bereitzustellen. Ein Vorteil der Vorrichtung aus Fig. 1 und Fig. 2 ist, dass die Umschaltung zwischen den beiden Modi allein durch die Verstellung der Brennweite vom Objektiv 12 durchgeführt wird. Die Verstellung der Brennweite vom Objektiv 12 kann motorgesteuert oder manuell mittels eines Verstellmechanismus, beispielsweise durch Verdrehen eines Teils des Objektivs, erfolgen. Der Drehspiegel 11 wird im zweiten Modus nicht geschwenkt, weil zur Farbmessung keine Abtastbewegung 22 aus Fig.1 notwendig ist. Der Beleuchtungsstrahl 14 kann auch aus mehreren Teilstrahlen bestehen, die in einer Ebene parallel zueinander verlaufen. In diesem Fall besteht die Lichtquelle 5 aus Fig. 1 aus mehreren Teillichtquellen, die Teilstrahlen aussenden. Das Objektiv 12 besteht dann aus mehreren Teilobjektiven, die die einzelnen Teilstrahlen auf Fokuspunkte fokussieren, die in einer Reihe im ersten Modus in der ersten Ebene 15 und im zweiten Modus in der zweiten Ebene 30 angeordnet sind. Die 3D-Vermessung mit mehreren Teilstrahlen hat den Vorteil, das die Zeitdauer der 3D-Vermessung erheblich verkürzt wird. Zwischen dem Objektiv 12 und dem Farbsensor 8 ist eine Leuchtfeldblende 32 angeordnet. Die Leuchtfeldblende 32 ist eine verstellbare Blende, um den ausgeleuchteten Bereich des Messobjekts 17 im zweiten Beleuchtungsmodus und die Größe des Messfeldes 23 im ersten Modus einzustellen. Zwischen dem Objektiv 12 und dem Messobjekt 17 ist ein chromatisches Objektiv 33 angeordnet. Das chromatische Objektiv 33 wird im ersten Modus für die optische 3D-Vermessung mittels der chromatischen konfokalen Messmethode in den Strahlengang des Beleuchtungsstrahls 14 eingebracht und im zweiten Modus für die Farbmessung aus dem Strahlengang des Beleuchtungsstrahls 14 herausgeschwenkt. Das chromatische Objektiv 33 verstärkt den Effekt der chromatischen Abberationen, so dass die Fokuspunkte für die unterschiedlichen Wellenlängen deutlich auseinandergezogen werden. Dadurch dominiert im Beobachtungsstrahl 18 jeweils diejenige Wellenlänge, deren Fokuspunkt gerade auf der Messobjektsoberfläche 16 liegt. In der vorliegenden Ausführungsform liegen die Fokuspunkte für eine Wellenlänge von 400 nm und eine Wellenlänge von 800 nm für ein tageslichtähnliches Spektrum 30 mm auseinander. Damit wird die Messtiefe eines Zahns 17 abgedeckt. Im zweiten Modus wird das chromatische Objektiv 33 um eine Schwenkachse 34 aus dem Beleuchtungsstrahl 14 herausgeschwenkt, so dass die Fokuspunkte der unterschiedlichen Wellenlängen zusammenrücken und sich nahezu überlagern. Die überlagerten Wellenlängen bilden somit ein homogenes weißes Lichtfeld mit einem tageslichtähnlichen Spektrum.

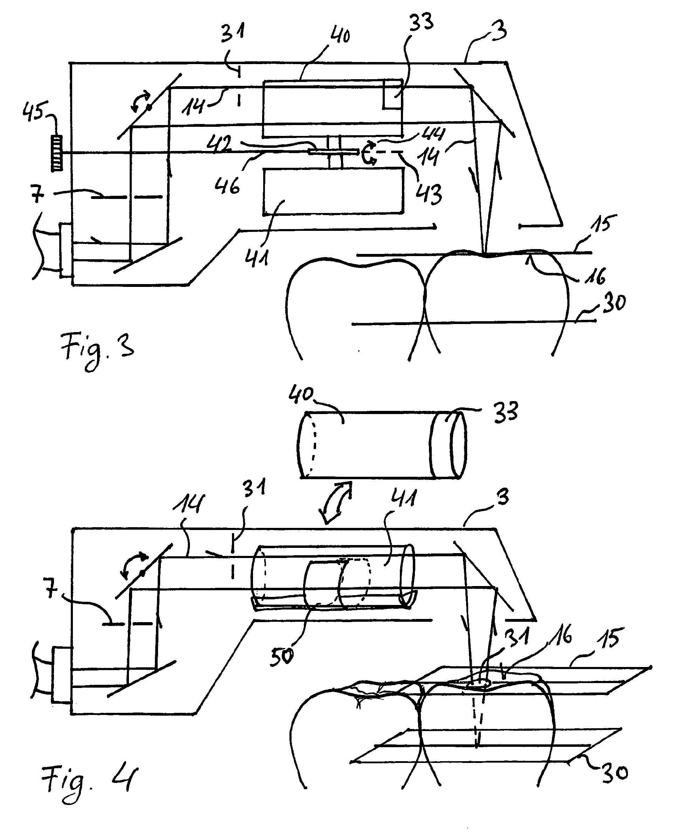

Die Fig. 3 zeigt eine weitere Ausführungsform der Vorrichtung 1 aus Fig. 1, wobei die Basiseinheit 2 unverändert bleibt, wobei das Handstück 3 frei beweglich ist. Das Handstück 3 umfasst ein erstes Objektiv 40 und ein zweites Objektiv 41, wobei die beiden Objektive 40, 41 durch einen Schwenkmechanismus 42 um eine Achse 43 in den Strahlengang des Beleuchtungsstrahls 14 schwenkbar sind. Die Brennweite des ersten Objektivs 40 ist so bemessen, dass der Beleuchtungsstrahl 14 auf die erste Ebene 15 der Messobjektsoberfläche 16, nämlich der Zahnoberfläche, fokussiert wird und die Brennweite des zweiten Objektivs 41 so bemessen ist, dass der Beleuchtungsstrahl 14 auf die zweite Ebene 30 fokussiert wird. Beim Umschalten zwischen den beiden Modi wird das entsprechende Objektiv 40, 41 mittels des Schwenkmechanismus 42 in einer Schwenkbewegung 44 in den Strahlengang des Beleuchtungsstrahls 14 geschwenkt. Der Schwenkmechanismus 42 wird mittels eines Auslösers in Form eines Drehknopfes 45, der mit dem Schwenkmechanismus über eine Welle 46 verbunden ist. Die Umschaltung zwischen den Modi erfolgt durch eine manuelles Verdrehen des Drehknopfes 45 durch einen Benutzer. Die Verstellung des Schwenkmechanismus 42 kann auch motorgesteuert erfolgen. Das erste objektiv 40 umfasst das chromatische Objektiv 33, das im Strahlengang des Beleuchtungsstrahls 14 angeordnet ist, so dass beim herausschwenken des ersten Objektivs 40 auch das chromatische Objektiv 33 aus dem Strahlengang des Beleuchtungsstrahls 14 herausgeschwenkt wird.

Die Fig. 4 zeigt eine weitere Ausführungsform der Vorrichtung 1 im zweiten Modus, wobei die Basiseinheit aus Fig. 1 unverändert bleibt und das Handstück 3 eine alternative Ausführungsform darstellt. Beim Umschalten zwischen den beiden Modi wird das erste Objektiv 40 zum Betreiben im ersten Modus und des zweite Objektiv 41 zum Betreiben im zweiten Modus manuell durch den Benutzer in den Strahlengang des Beleuchtungsstrahls 14 eingesetzt. Im dargestellten Fall ist das zweite Objektiv 42 eingesetzt, dass den Beleuchtungsstrahl 14 auf die zweite Ebene 30 fokussiert, sodass der Unschärfekreis 31 auf der Messobjektsoberfläche 16 zur Farbmessung im zweiten Modus abgebildet wird. Das Handstück 3 umfasst Befestigungsmittel 50 in der Form einer flexiblen Spannklammer, die ein genaues Positionieren des Objektivs 40 bzw. 41 im Strahlengang des Beleuchtungsstrahls 14 ermöglicht. Zwischen dem Objektiv 40 und dem nicht dargestellten Farbsensor 8 ist die Leuchtfeldblende 32 angeordnet.

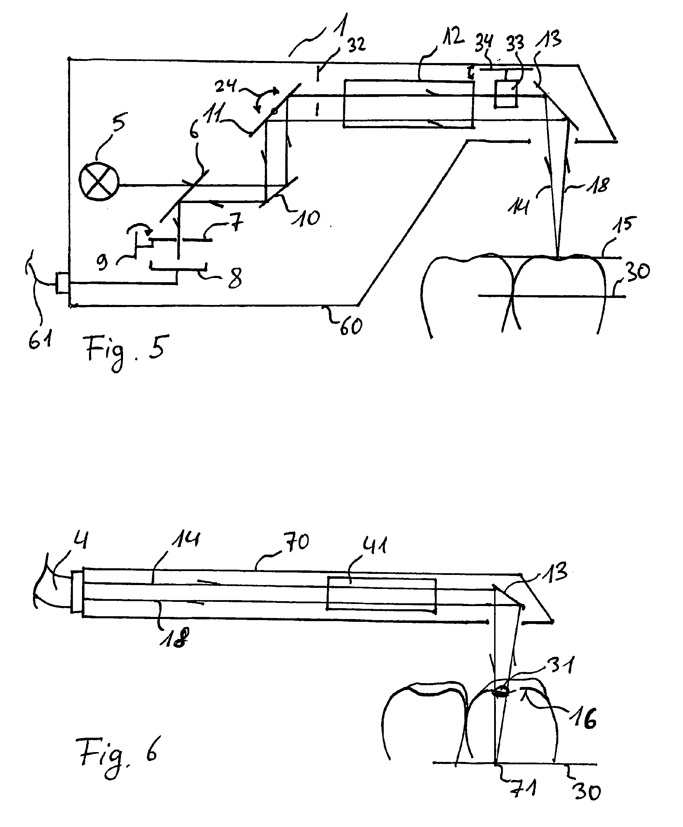

Die Fig. 5 zeigt eine weitere Ausführungsform der Vorrichtung 1 die einteilig konstruiert ist. Alle Bauteile der Vorrichtung 1 sind in dieser Ausführungsform in einem Gehäuse 60 angebracht. Zu den Bauteilen zählen die Lichtquelle 5, der Strahlteiler 6, die Blende 7, der Farbsensor 8, der erste Umlenkspiegel 10, der Drehspiegel 11, das Objektiv 12 und der dritte Umlenkspiegel 13. Ein Datenkabel 61 verbindet die Vorrichtung mit einer nichtdargestellten Bildanalyseeinheit, um die Daten des Farbsensors 8 zur Bildanalyse zu übermitteln. Bei der dargestellten Ausführungsform erfolgt die Umschaltung zwischen den beiden Modi durch die Verstellung der Brennweite des Objektivs 12 wie in Fig. 1 und Fig.2. Die einteilige Konstruktion der Vorrichtung 1 wäre auch für die in Fig. 3 und Fig. 4 dargestellten Ausführungsformen möglich. Ein Vorteil der einteiligen Konstruktion der Vorrichtung 1 ist, dass der flexible Lichtleiter 4 eingespart wird. Zwischen dem Objektiv 12 und dem Farbsensor 8 ist die Leuchtfeldblende 32 angeordnet.

Die Fig. 6 zeigt ein zweites Handstück 70 als ein Element einer weiteren Ausführungsform der Vorrichtung 1 aus Fig. 1. In dieser Ausführungsform wird beim Umschalten aus dem ersten Modus in den zweiten Modus das erste Handstück 3 aus Fig. 1 vom Lichtleiter 4 getrennt und das zweite Handstück 70 an den Lichtleiter 4 angeschlossen. Dabei weist das erste Handstück 3 ein Objektiv 12, dessen Brennweise nicht veränderbar ist und konstant auf die Brennweite des ersten Modus eingestellt ist. Das zweite Handstück 70 umfasst ein zweites Objektiv 41, dass den Beleuchtungsstrahl 14 auf einen Fokuspunkt 71 auf der zweiten Ebene 30 fokussiert und dadurch der Unschärfekreis 31 auf der Messobjektsoberfläche 16 zur Farbmessung abgebildet wird. Der Austausch des ersten Handstücks 3 gegen das zweite Handstück 70 erfolgt manuell durch den Benutzer. Das zweite Handstück 70 ist kompakter als das erste Handstück 3 konstruiert, da der Drehspiegel 11 zur Erzeugung einer Abtastbewegung 22 eingespart wird. Das zweite Handstück zur Farbmessung im zweiten Modus kann auch ohne das zweite Objektiv 41 konstruiert werden, sodass der Beleuchtungsstrahl 14 nicht fokussiert wird und direkt auf die Messobjektsoberfläche 16 mittels des Umlenkspiegels 13 umgelenkt wird. Dazu muss der Beleuchtungsstrahl 14 eine homogene Intensitätsverteilung und ein tageslichtähnliches Spektrum aufweisen. Zwischen dem Objektiv 12 und dem Umlenkspiegel 13 ist das chromatische Objektiv 33 im Strahlengang des Beleuchtungsstrahls 14 angeordnet, wobei das chromatische Objektiv 33 um die Schwenkachse 34 im zweiten Modus aus dem Beleuchtungsstrahl 14 herausgeschwenkt wird.

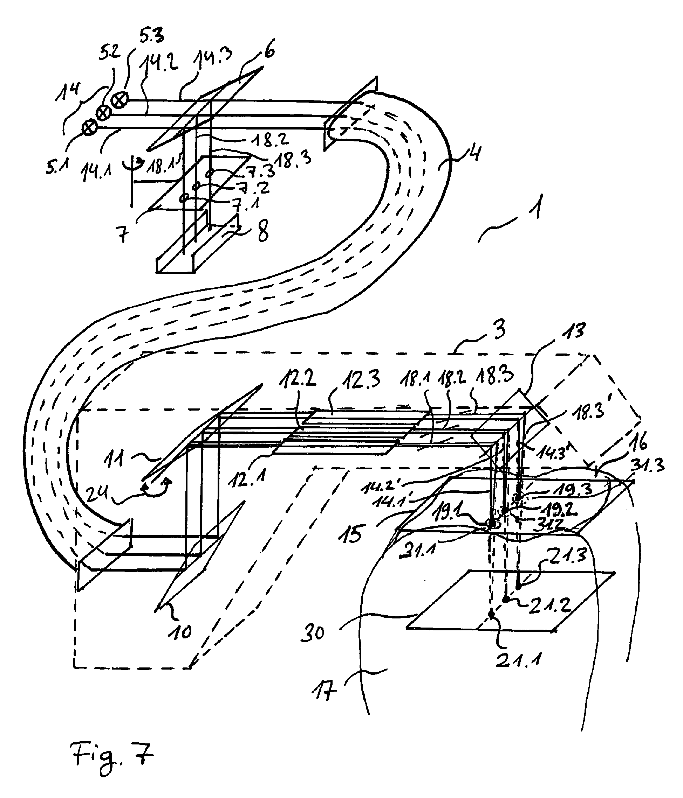

Die Fig. 7 zeigt eine weiter Ausführungsform der Vorrichtung 1 aus Fig. 1 mit einem Beleuchtungsstrahl 14 bestehend aus drei Teilstrahlen 14.1, 14.2 und 14.3. Die Teilstrahlen 14.1, 14.2 und 14.3 des Leuchtungsstrahls 14 werden von drei nebeneinander in einer Reihe angeordneten Lichtquellen 5.1, 5.2 und 5.3 ausgestrahlt, passieren den Strahlteiler 6, werden über den Lichtleiter 4 zum Handstück 3 geleitet, dort mittels des erstens Umlenkspiegels 10 zum Drehspiegel 11 umgeleitet, vom Drehspiegel 11 in Richtung des dritten Umlenkspiegels 13 umgeleitet und durch den dritten Umlenkspiegel 13 zum Messobjekt 17 in Form eines Zahns umgelenkt. Zwischen dem Drehspiegel 11 und dem dritten Umlenkspiegel 13 sind drei Objektive 12.1, 12.2 und 12.3 angeordnet, die die einzelnen Teilstrahlen 14.1, 14.2 und 14.3 im ersten Modus auf die Fokuspunkte 19.1, 19.2 und 19.3 in der ersten Ebene 15 und im zweiten Modus auf die Fokuspunkte 21.1, 21.2 und 21.3 in der zweiten Ebene 30 fokussiert werden. Die Teilstrahlen 14.1, 14.2, und 14.3 des Beleuchtungsstrahls 14 im ersten Modus sind als volle Linien dargestellt. Die Teilstrahlen 14.1',14.2' und 14.3' des Beleuchtungsstrahls 14 im zweiten Modus sind als gestrichelte Linien dargestellt. Die Teilstrahlen 14.1, 14.2 und 14.3 werden von der Messobjektsoberfläche 16 als Teilstrahlen 18.1, 18.2 und 18.3 des Beobachtungsstrahls 18 zurückgestrahlt. Im zweiten Modus sind die Teilstrahlen 18.1',18.2', und 18.3' als gestrichelte Linien dargestellt. Im ersten Modus zur 3D-Vermessung unter Verwendung der chromatisch konfokalen Messmethode passieren die Teilstrahlen 18.1, 18.2 und 18.3 des Beobachtungsstrahls 18 die einzelnen Teilblenden 7.1, 7.2 und 7.3, wobei wie zu Fig. 1 bereits erläutert nur diejenigen schmalbandigen Spektralbereiche herausgefiltert werden, die exakt auf die Messobjektsoberfläche 16 fokussiert sind. Diese schmalbandigen Spektralbereiche werden von Farbsensor 8 einzeln detektiert, um anhand der Wellenlänge dieser schmalbandigen Spektralbereiche die absolute Position der Messobjektsoberfläche 16 in Richtung der Teilstrahlen 14.1, 14.2 und 14.3 des Beleuchtungsstrahls 14 zu bestimmen. Die Drehbewegung 24 des Drehspiegels 11 erzeugt wie bereits zu Fig. 1 beschrieben eine simultane Abtastbewegung der einzelnen Beleuchtungsstrahlen 14.1, 14.2 und 14,3. In Vergleich zu der Vorrichtung 1 aus der Fig. 1 wird die Zeitdauer der 3D-Vermessung eines Messfeldes gleicher Fläche erheblich verkürzt, da die Teilstrahlen 14.1, 14.2 und 14.3 des Beleuchtungsstrahls 14 mit einer simultanen Abtastbewegung die Messobjektsoberfläche 16 erfassen können. Die Fokuspunkte 19.1, 19.2 und 19.3 sind nebeneinander in einer Reihe in der ersten Ebene 15 angeordnet.

Im zweiten Modus wird die Blende 7 mit den Teilblenden 7.1, 7.2 und 7.3 aus dem Strahlengang der einzelnen Teilstrahlen 18.1, 18.2 und 18.3 des Beobachtungsstrahls herausgeschwenkt, sodass das volle Spektrum mittels des Farbsensors 8 detektiert wird. Beim Umschalten der Vorrichtung 1 aus dem ersten Modus in den zweiten Modus werden die einzelnen Teilobjektive 12.1, 12.2 und 12.3 in ihrer Brennweite gleichzeitig so verändert, dass die Fokuspunkte 19.1, 19.2 und 19.3 sich zu den Fokuspunkten 21.1, 21.2 und 21.3 verschieben. Die Steuerung der Brennweite für die einzelnen Teilobjektive 12.1, 12.2 und 12.3 ist mittels eines Kopplungsmechanismus aneinander gekoppelt. Die Steuerung der Brennweite kann manuell durch einen Benutzer oder motorgesteuert erfolgen. Ein Beleuchtungsstrahl aus mehreren Teilstrahlen kann auch für die Vorrichtungen aus Fig. 3 bis Fig.6 verwendet werden. Die Teilstrahlen 14.1',14.2' und 14.3' werden unscharf auf der Messobjektsoberfläche 16 abgebildet und erzeugen Unschärfekreise 31.1, 31.2 und 31.3 die eine homogene Intensität und ein tageslichtähnliches Spektrum aufweisen. In Fig. 7 sind die Unschärfekreise 31.1, 31.2 und 31.3 als gestrichelte Kreise dargestellt, die sich nicht überlagern, sodass nur innerhalb der Unschärfekreise die Farbmessung erfolgt. Es kann zu Überlagerung der einzelnen Unschärfekreise 31.1, 31.2 und 31.3 kommen, falls die Brennweite in einem höheren Maß verändert wird oder die einzelnen parallelen Teilstrahlen 14.1, 14.2 und 14.3 näher zueinander angeordnet sind. Bei einer Überlagerung der Unschärfekreise kann sich ein streifenförmiges Messfeld ergeben, das zur Farbmessung geeignet ist. Im zweiten Modus bleibt der Drehspiegel 11 wie bereits in Fig. 2 starr.

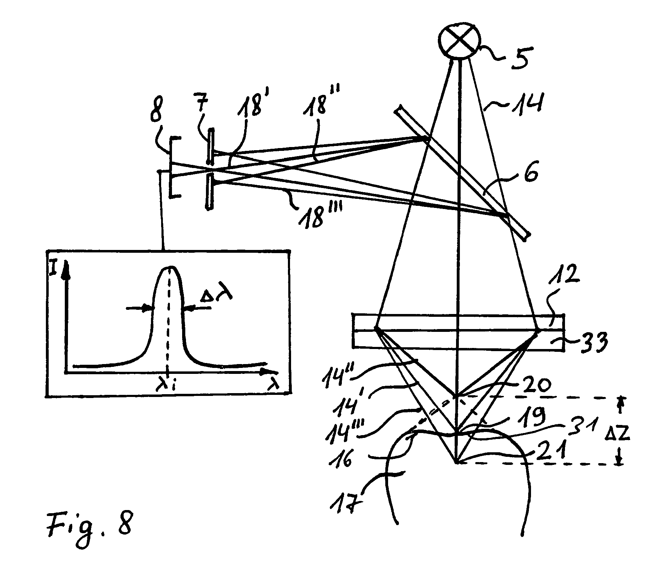

Die Fig. 8 zeigt eine schematische Darstellung der chromatisch konfokalen Messmethode. Die Lichtquelle 5 erzeugt einen polychromatischen Beleuchtungsstrahl 14, der ein tageslichtähnliches Spektrum aufweist und somit blaues Licht kurzer Wellenlänge, grünes Licht mittlerer Wellenlänge sowie rotes Licht langer Wellenlänge umfasst. Der Beleuchtungsstrahl 14 durchstrahlt den Strahlteiler 6 und wird vom Objektiv 12 fokussiert. Bei der optischen Brechung ist der Brechungswinkel abhängig von der Wellenlänge des gebrochenen Lichts, sodass der grünfarbige Spektralbereich mittlerer Wellenlänge 14' des Beleuchtungsstrahls 14 auf die Messobjektsoberfläche 16 des Messobjekts 17 fokussiert wird, der blaue Spektralbereich kurzer Wellenlänge 14" des Beleuchtungsstrahls 14 auf einen Fokuspunkt 20 oberhalb der Messobjektsoberfläche 16 fokussiert wird und der rote Spektralbereich kurzer Wellenlänge 14'" auf den Fokuspunkt 21 unterhalb der Messobjektsoberfläche 16 fokussiert wird. Dadurch wird nur der grüne Spektralbereich mittlerer Wellenlänge 14' scharf auf der Messobjektsoberfläche 16 abgebildet, wobei der blaue Spektralbereich 14" und der rote Spektralbereich 14"' unscharf auf der Messobjektsoberfläche 16 in Form von Unschärfekreisen 31 abgebildet werden. Der Beleuchtungsstrahl 14 wird von der Messobjektsoberfläche 16 als der Beobachtungsstrahl 18 zurückgestrahlt und vom Strahlteiler 6 in Richtung des Farbsensors 8 umgelenkt. Zwischen den Strahlteiler 6 und dem Farbsensor 8 ist die Blende 7 konfokal zum Fokuspunkt 19 auf der Messobjektsoberfläche 16 angeordnet. Folglich passiert nur der grüne Spektralbereich 18" mittlerer Wellenlänge die Blende 7, wobei der blaue Spektralbereich 18" und der rote Spektralbereich 18'" des Beobachtungsstrahls 18 herausgefiltert werden. Die Bilddaten des Farbsensors 8 werden in ihrem Spektrum analysiert und die Wellenlänge λi des grünen Spektralbereichs 18' bestimmt. Aus dieser Wellenlänge λi wird dann die absolute Position der Messobjektsoberfläche 16 in Richtung des Beleuchtungsstrahls 14 bestimmt. Der Messbereich ΔZ der dargestellten Vorrichtung befindet sich zwischen den Fokuspunkten 20 und 21 der Beleuchtungsstrahlen 14" und 14'" äußeren Spektralbereiche, innerhalb dessen die absolute Position der Messobjektsoberfläche 16 bestimmt werden kann. Der Messbereich ΔZ steigt folglich mit der Spektrumsbreite des Beleuchtungsstrahls 14. Der Vorteil der chromatisch konfokalen Messmethode gegenüber der monochromatischen konfokalen Messmethode ist, dass die Brennweite des Objektivs 12 nicht verändert werden muss, um den Brennpunkt entlang der Strahlrichtung zu bewegen. Zwischen dem Objektiv 12 und dem Objekt 12 ist das chromatische Objektiv 33 im Strahlengang des Beleuchtungsstrahls 14 angeordnet, um die Fokuspunkte 20 und 21 auf den Messbereich ΔZ auseinanderzubringen. Der Messbereich ΔZ beträgt 30 mm.

### Bezugszeichenliste

| | |
|---|---|
| 1 | Vorrichtung |
| 2 | Basiseinheit |
| 3 | Handstück |
| 4 | Lichtleiter |
| 5 | Lichtquelle |
| 6 | Strahlteiler |
| 7 | Blende |
| 8 | Farbsensor |
| 9 | Achse |
| 10 | Umlenkspiegel |
| 11 | Drehspiegel |
| 12 | Objektiv |
| 13 | Umlenkspiegel |
| 14 | Beleuchtungsstrahl |
| 15 | erste Ebene |
| 16 | Messobjektoberfläche |
| 17 | Messobjekt |
| 18 | Beobachtungsstrahl |
| 19 | Fokuspunkt |
| 20 | Fokuspunkt des kurzwelligeren Spektralbereichs |
| 21 | Fokuspunkt des langwelligen Spektralbereichs |
| 22 | Abtastbewegung |
| 23 | Messfeld |
| 24 | Schwenkbewegung |
| 25 | Achse |
| 30 | zweite Ebene |
| 31 | Unschärfekreis |
| 40 | erstes Objektiv |
| 41 | zweites Objektiv |
| 42 | Schwenkmechanismus |
| 43 | Achse |
| 44 | Schwenkbewegung |
| 45 | Drehknopf |
| 46 | Welle |
| 50 | Befestigungsmittel |
| 60 | Gehäuse |
| 70 | zweites Handstück |
| 71 | Fokuspunkt |
| 14.1, 14.2, 14.3 | Teilstrahlen |
| 5.1, 5.2, 5.3 | Teillichtquellen |
| 12.1, 12.2, 12.3 | Teilobjektive |
| 19.1, 19.2, 19.3 | Fokuspunkte |
| 21.1, 21.2, 21.3 | Fokuspunkte |
| 14.1', 14.2', 14.3' | Teilstrahlen |
| 31.1, 31.2, 31.3 | Unschärfekreise |
| 14', 14", 14"' | Spektralbereiche des Beleuchtungsstrahls |
| 18', 18", 18"' | Spektralbereiche des Beobachtungsstrahls |
| f | Brennweite |
| ΔZ | Messbereich |

## Patentansprüche

1. Vorrichtung (1) zur optischen 3D-Vermessung, umfassend ein Objektiv (12), **dadurch gekennzeichnet, dass** die Vorrichtung zwischen einem ersten Modus für die optische 3D-Vermessung mittels der chromatischen konfokalen Messmethode und einem zweiten Modus für die Farbmessung verstellbar ist, indem mittels des Objektivs (12) im ersten Modus ein breitbandiger Beleuchtungsstrahl (14) auf eine erste Ebene (15) einer Messobjektsoberfläche (16) fokussierbar ist und im zweiten Modus der breitbandige Beleuchtungsstrahl (14) mittels des Objektivs (12) auf eine zweite Ebene (30) außerhalb der ersten Ebene (15) in einem Abstand d von der Messobjektsoberfläche (16) fokussierbar ist, wobei im zweiten Modus zur Farbmessung die Brennweite des Objektivs (12) so wählbar ist, dass die Fokuspunkte für alle Wellenlängen des Beleuchtungsstrahls (14) außerhalb der ersten Ebene (15) liegen und dass der Beleuchtungsstrahl (14) als ein Messfeld in der Form eines Unschärfekreises unscharf auf der Messobjektsoberfläche (16) abgebildet ist, wobei die Verstellung der Brennweite durch ein Verdrehen eines Verstellmittels des Objektivs erfolgt, das eine innere Mechanik des Objektivs verstellt, um die Brennweite zu ändern.

2. Vorrichtung (1) zur optischen 3D-Vermessung, umfassend ein erstes Objektiv (40) und ein zweites Objektiv (41), **dadurch gekennzeichnet, dass** die Vorrichtung zwischen einem ersten Modus für die optische 3D-Vermessung mittels der chromatischen konfokalen Messmethode und einem zweiten Modus für die Farbmessung verstellbar ist, indem mittels des ersten Objektivs (40) im ersten Modus ein breitbandiger Beleuchtungsstrahl (14) auf eine erste Ebene (15) einer Messobjektsoberfläche (16) fokussierbar ist und im zweiten Modus der breitbandige Beleuchtungsstrahl (14) mittels des zweiten Objektivs (41) auf eine zweite Ebene (30) außerhalb der ersten Ebene (15) in einem Abstand d von der Messobjektsoberfläche (16) fokussierbar ist, wobei im zweiten Modus zur Farbmessung die Brennweite des zweiten Objektivs (41) so wählbar ist, dass die Fokuspunkte für alle Wellenlängen des Beleuchtungsstrahls (14) außerhalb der ersten Ebene (15) liegen und dass der Beleuchtungsstrahl (14) als ein Messfeld in der Form eines Unschärfekreises unscharf auf der Messobjektsoberfläche (16) abgebildet ist, wobei mittels eines Schwenkmechanismus (42) das erste Objektiv (40) zum Betreiben im ersten Modus und das zweite Objektiv (41) zum Betreiben im zweiten Modus in den Strahlengang des Beleuchtungsstrahls (14) schwenkbar sind.

3. Vorrichtung (1) zur optischen 3D-Vermessung, umfassend ein erstes Objektiv (40) und ein zweites Objektiv (41), **dadurch gekennzeichnet, dass** die Vorrichtung zwischen einem ersten Modus für die optische 3D-Vermessung mittels der chromatischen konfokalen Messmethode und einem zweiten Modus für die Farbmessung verstellbar ist, indem mittels des ersten Objektivs (40) im ersten Modus ein breitbandiger Beleuchtungsstrahl (14) auf eine erste Ebene (15) einer Messobjektsoberfläche (16) fokussierbar ist und im zweiten Modus der breitbandige Beleuchtungsstrahl (14) mittels des zweiten Objektivs (41) auf eine zweite Ebene (30) außerhalb der ersten Ebene (15) in einem Abstand d von der Messobjektsoberfläche (16) fokussierbar ist, wobei im zweiten Modus zur Farbmessung die Brennweite des zweiten Objektivs (41) so wählbar ist, dass die Fokuspunkte für alle Wellenlängen des Beleuchtungsstrahls (14) außerhalb der ersten Ebene (15) liegen und dass der Beleuchtungsstrahl (14) als ein Messfeld in der Form eines Unschärfekreises unscharf auf der Messobjektsoberfläche (16) abgebildet ist, wobei zum Betreiben im ersten Modus das erste Objektiv (40) und zum Betreiben im zweiten Modus das zweite Objektiv (41) durch einen Benutzer in den Strahlengang des Beleuchtungsstrahls (14) einbringbar sind.

4. Vorrichtung (1) zur optischen 3D-Vermessung, umfassend ein erstes Objektiv (40) und ein zweites Objektiv (41), **dadurch gekennzeichnet, dass** die Vorrichtung zwischen einem ersten Modus für die optische 3D-Vermessung mittels der chromatischen konfokalen Messmethode und einem zweiten Modus für die Farbmessung verstellbar ist, indem mittels des ersten Objektivs (40) im ersten Modus ein breitbandiger Beleuchtungsstrahl (14) auf eine erste Ebene (15) einer Messobjektsoberfläche (16) fokussierbar ist und im zweiten Modus der breitbandige Beleuchtungsstrahl (14) mittels des zweiten Objektivs (41) auf eine zweite Ebene (30) außerhalb der ersten Ebene (15) in einem Abstand d von der Messobjektsoberfläche (16) fokussierbar ist, wobei im zweiten Modus zur Farbmessung die Brennweite des zweiten Objektivs (41) so wählbar ist, dass die Fokuspunkte für alle Wellenlängen des Beleuchtungsstrahls (14) außerhalb der ersten Ebene (15) liegen und dass der Beleuchtungsstrahl (14) als ein Messfeld in der Form eines Unschärfekreises unscharf auf der Messobjektsoberfläche (16) abgebildet ist, wobei die Vorrichtung (1) aus einer Basiseinheit (2), einem erstem Handstück (3) und einem zweiten Handstück besteht, wobei das erste Handstück und das zweite Handstück über einen Lichtleiter (4) mit dem Basisteil (2) verbunden sind, wobei die Basiseinheit (2) eine Lichtquelle (5), einen Strahlteiler (6) und einen Farbsensor (8) umfasst, wobei zum Betreiben im ersten Modus das erste Handstück (3) mit dem ersten Objektiv (40) und zum Betreiben im zweiten Modus das zweite Handstück mit dem zweiten Objektiv (41) durch einen Benutzer mit der Basiseinheit (2) verbindbar sind.

5. Vorrichtung (1) nach einem der Ansprüche 1 bis 4, **dadurch gekennzeichnet, dass** der Beleuchtungsstrahl (14) aus mehreren Teilstrahlen (14.1, 14.2, 14.3) besteht, die in einer Ebene parallel zueinander verlaufen, wobei mittels des jeweiligen im Strahlengang des Beleuchtungsstrahls (14) angeordneten Objektivs (12, 40, 41), umfassend mehrere Teilobjektive (12.1, 12.2, 12.3), die einzelnen Teilstrahlen (14.1, 14.2, 14.3) im ersten Modus auf Fokuspunkte (19.1, 19.2, 19.3) fokussiert werden, die in einer Reihe auf der ersten Ebene (15) der Messobjektsoberfläche (16) angeordnet sind, und im zweiten Modus auf Fokuspunkte (21.1, 21.2, 21.3) fokussiert werden, die in einer Reihe auf der zweiten Ebene (30) außerhalb der ersten Ebene (15) angeordnet sind, so dass die Teilstrahlen (12.1, 12.2, 12.3) unscharf in Form von Unschärfekreisen (31.1, 31.2, 31.3) auf der Messobjektsoberfläche (16) abgebildet werden und sich zu einem Messfeld überlagern.

6. Vorrichtung (1) nach einem der Ansprüche 1 bis 5, **dadurch gekennzeichnet, dass** der Durchmesser einer Blende (7), die konfokal zur Messobjektsoberfläche (16) im Strahlengang des Beobachtungsstrahls (18) angeordnet ist, im ersten Modus zur 3D-Vermessung mittels der chromatischen konfokalen Messmethode größer als der Durchmesser der Blende im zweiten Modus zur Farbmessung ist, so dass die Tiefenschärfe im ersten Modus geringer als die Tiefenschärfe im zweiten Modus ist, wobei die Blende (7) steuerbar ist und der Durchmesser der Blende (7) verstellbar ist.

7. Vorrichtung (1) nach einem der Ansprüche 1 bis 5, **dadurch gekennzeichnet, dass** der Durchmesser einer Blende (7), die konfokal zur Messobjektsoberfläche (16) im Strahlengang des Beobachtungsstrahls (18) angeordnet ist, im ersten Modus zur 3D-Vermessung mittels der chromatischen konfokalen Messmethode größer als der Durchmesser der Blende im zweiten Modus zur Farbmessung ist, so dass die Tiefenschärfe im ersten Modus geringer als die Tiefenschärfe im zweiten Modus ist, wobei die Blende (7) mit einem größeren Durchmesser im ersten Modus gegen eine Blende mit einem kleineren Durchmesser im zweiten Modus austauschbar ist.

8. Verfahren zur optischen 3D-Vermessung und zur Farbmessung, **dadurch gekennzeichnet, dass** eine Vorrichtung (1) zwischen einem ersten Modus für die optische 3D-Vermessung mittels der chromatischen konfokalen Messmethode und einem zweiten Modus für die Farbmessung verstellt wird, indem im ersten Modus ein breitbandiger Beleuchtungsstrahl (14) auf eine erste Ebene (15) einer Messobjektsoberfläche (16) fokussiert wird und im zweiten Modus der breitbandige Beleuchtungsstrahl (14) auf eine zweite Ebene (30) außerhalb der ersten Ebene (15) in einem Abstand d von der Messobjektsoberfläche (16) fokussiert wird, wobei im zweiten Modus zur Farbmessung der Beleuchtungsstrahl (14) auf die zweite Ebene (30) so fokussiert wird, dass die Fokuspunkte für alle Wellenlängen des Beleuchtungsstrahls (14) außerhalb der ersten Ebene (15) liegen und dass der Beleuchtungsstrahl (14) als ein Messfeld in der Form eines Unschärfekreises mit einem tageslichtähnlichen Spektrum auf die Messobjektsoberfläche (16) abgebildet wird.

9. Verfahren nach Anspruch 8, **dadurch gekennzeichnet, dass** bei der Verstellung der Vorrichtung (1) vom ersten Modus in den zweiten Modus mittels eines Schwenkmechanismus ein erstes Objektiv aus dem Strahlengang des Beleuchtungsstrahls (14) herausgeschwenkt und ein zweites Objektiv in den Strahlengang des Beleuchtungsstrahls (14) hineingeschwenkt wird.

10. Verfahren nach Anspruch 8, **dadurch gekennzeichnet, dass** die Vorrichtung (1) ein erstes Objektiv (40)und ein zweites Objektiv (41) umfasst, wobei bei der Verstellung der Vorrichtung (1) vom ersten Modus in den zweiten Modus durch einen Benutzer das erste Objektiv (40) aus dem Strahlengang des Beleuchtungsstrahls (14) herausgenommen und das zweite Objektiv in den Strahlengang des Beleuchtungsstrahls (14) eingesetzt wird.

11. Verfahren nach Anspruch 8 **dadurch gekennzeichnet, dass** die Vorrichtung (1) aus einer Basiseinheit (2), einem ersten Handstück (3) und einem zweiten Handstück besteht, wobei im ersten Modus das erste Handstück (3) mit einem ersten Objektiv (40) und zum Betreiben im zweiten Modus das zweite Handstück mit einem zweiten Objektiv (41) durch einen Benutzer mit der Basiseinheit (2) verbunden wird.

12. Verfahren nach einem der Ansprüche 8 bis 11, **dadurch gekennzeichnet, dass** der Beleuchtungsstrahl (14) aus mehreren Teilstrahlen besteht, wobei die einzelnen Teilstrahlen im ersten Modus auf Fokuspunkte fokussiert werden, die in einer Reihe in der ersten Ebene der Messobjektsoberfläche (16) angeordnet sind, und im zweiten Modus auf die zweite Ebene (30) außerhalb der ersten Ebene der Messobjektsoberfläche (16) fokussiert werden, so dass die Teilstrahlen unscharf auf der Messobjektsoberfläche (16) abgebildet werden und sich zu einem Messfeld mit nahezu homogener Intensität überlagern.

13. Verfahren nach einem der Ansprüche 8 bis 12, **dadurch gekennzeichnet, dass** der Durchmesser einer Blende (7), die konfokal zur Messobjektsoberfläche (16) im Strahlengang des Beobachtungsstrahls (18) angeordnet ist, im ersten Modus zur 3D-Vermessung mittels der chromatischen konfokalen Messmethode größer als der Durchmesser der Blende (7) im zweiten Modus zur Farbmessung mittels eines Blendenmittels eingestellt wird, so dass die Tiefenschärfe im ersten Modus geringer als die Tiefenschärfe im zweiten Modus ist.

14. Verfahren nach Anspruch 13, **dadurch gekennzeichnet, dass** die Blende (7) elektronisch gesteuert wird und dadurch der Durchmesser der Blende (7) verstellt wird.

## Claims

1. A device (1) for optical 3D measurement, comprising an objective (12), **characterized in that** said device can be switched between a first mode for optical 3D measurement using the chromatic confocal measuring method and a second mode for colorimetric measurement **in that** in the first mode a broad-band illuminating beam (14) can be focused by means of the objective (12) onto a first plane (15) of said surface (16) of an object to be measured, and in the second mode the broad-band illuminating beam (14) can be focused by means of the objective (12) onto a second plane (30) other than the first plane (15) at a distance d from said surface (16) of said object to be measured, wherein in the second mode for colorimetric measurement, the depth of field of said objective (12) can be selected such that the points of focus for all wavelengths of said illuminating beam (14) are outside said first plane (15) and said illuminating beam (14) is reproduced out-of-focus in the form of a fuzzy circle as a measurement area on said surface (16) of said object to be measured, wherein the adjustment of the focal length is carried out by turning adjusting means on said objective, by means of which an internal mechanism of said objective is adjusted so as to change the focal length.

2. A device (1) for optical 3D measurement, comprising a first objective (40) and a second objective (41), **characterized in that** said device can be switched between a first mode for optical 3D measurement using the chromatic confocal measuring method and a second mode for colorimetric measurement **in that** in the first mode a broad-band illuminating beam (14) can be focused by means of said first objective (40) onto a first plane (15) of said surface (16) of an object to be measured, and in the second mode said broad-band illuminating beam (14) can be focused by means of said second objective (41) onto a second plane (30) other than the first plane (15) at a distance d from said surface (16) of said object to be measured, wherein in the second mode for colorimetric measurement, the depth of field of said second objective (41) can be selected such that the points of focus for all wavelengths of said illuminating beam (14) are outside said first plane (15), and said illuminating beam (14) is reproduced out-of-focus in the form of a fuzzy circle as a measurement area on said surface (16) of said object to be measured, wherein a revolving mechanism (42) is adapted to revolve said first objective (40), for operation in the first mode, and said second objective (41), for operation in the second mode, into the optical path of said illuminating beam (14).

3. A device (1) for optical 3D measurement, comprising a first objective (40) and a second objective (41), **characterized in that** said device can be switched between a first mode for optical 3D measurement using the chromatic confocal measuring method and a second mode for colorimetric measurement **in that** in the first mode a broad-band illuminating beam (14) can be focused by means of said first objective (40) onto a first plane (15) of said surface (16) of an object to be measured, and in the second mode the broad-band illuminating beam (14) can be focused by means of said second objective (41) onto a second plane (30) other than the first plane (15) at a distance d from said surface (16) of said object to be measured, wherein in the second mode for colorimetric measurement, the depth of field of said second objective (41) can be selected such that the points of focus for all wavelengths of said illuminating beam (14) are outside said first plane (15), and said illuminating beam (14) is reproduced out-of-focus in the form of a fuzzy circle as a measurement area on said surface (16) of said object to be measured, wherein a user can insert the first objective (40), for operation in the first mode, and the second objective (41), for operation in the second mode, into the optical path of said illuminating beam (14).

4. A device (1) for optical 3D measurement, comprising a first objective (40) and a second objective (41), **characterized in that** said device can be switched between a first mode for optical 3D measurement using the chromatic confocal measuring method and a second mode for colorimetric measurement **in that** in the first mode a broad-band illuminating beam (14) can be focused by means of said first objective (40) onto a first plane (15) of said surface (16) of an object to be measured, and in the second mode the broad-band illuminating beam (14) can be focused by means of said second objective (41) onto a second plane (30) other than the first plane (15) at a distance d from said surface (16) of said object to be measured, wherein in the second mode for colorimetric measurement, the depth of field of said second objective (41) can be selected such that the points of focus for all wavelengths of said illuminating beam (14) are outside said first plane (15), and said illuminating beam (14) is reproduced out-of-focus in the form of a fuzzy circle as a measurement area on said surface (16) of said object to be measured, wherein said device (1) consists of a base unit (2) a first handpiece (3) and a second handpiece, said first handpiece and said second handpiece being connected to said base unit (2) via a light guide (4), which base unit (2) comprises a light source (5), a beam splitter (6), and a color sensor (8), wherein for the purpose of operating in the first mode, said first handpiece (3) with said first objective (40) can be connected by a user to said base unit (2), and for the purpose of operating in the second mode, said second handpiece (3) with said second objective (41) can be connected by a user to said base unit (2).

5. The device (1) as defined in any one of claims 1 to 4, **characterized in that** said illuminating beam (14) consists of a plurality of component beams (14.1, 14.2, 14.3) extending parallel to each other in a single plane, wherein the objective (12, 40, 41) located in the optical path of said illuminating beam (14) and comprising a plurality of sub-objectives (12.1, 12.2, 12.3) focuses said individual component beams (14.1, 14.2, 14.3) in the first mode to focal points (19.1, 19.2, 19.3) disposed in a row on said first plane (15) of said surface (16) of said object to be measured and in the second mode to focal points (21.1, 21.2, 21.3) disposed in a row on said second plane (30) other than said first plane (15) such that said component beams (12.1, 12.2, 12.3) are out-of-focus and form fuzzy circles (31.1, 31.2, 31.3) on said surface (16) of said object to be measured and are superimposed to form a measurement area.

6. The device (1) as defined in any one of claims 1 to 5, **characterized in that** the diameter of a diaphragm (7), which is situated in the optical path of said monitoring beam so as to be confocal to said surface (16) of said object to be measured, in the first mode for 3D measurement using the chromatic confocal method of measurement is greater than the diameter of the diaphragm in the second mode for colorimetric measurement such that the depth of field in the first mode is shorter than the depth of field in the second mode, said diaphragm being controllable and the diameter of said diaphragm being variable.

7. The device (1) as defined in any one of claims 1 to 5, **characterized in that** the diameter of a diaphragm (7) disposed in the optical path of the monitoring beam (18) so as to be confocal to said surface (16) of said object to be measured is larger in the first mode for 3D measurement using the chromatic confocal method than the diameter of the diaphragm in the second mode for colorimetric measurement, such that the depth of field in the first mode is less than the depth of field in the second mode, wherein said diaphragm (7) having a larger diameter in the first mode can be replaced by a diaphragm having a smaller diameter in the second mode.

8. A method for optical 3D measurement and colorimetric measurement, **characterized in that** a device (1) is switched between a first mode for optical 3D measurement using the chromatic confocal method of measurement and a second mode for colorimetric measurement **in that** in the first mode a broad-band illuminating beam (14) is focused onto a first plane (15) of a surface (16) of said object to be measured and in the second mode said broad-band illuminating beam (14) is focused onto a second plane (30) other than said first plane (15) at a distance d from said surface (16) of said object to be measured, wherein in the second mode for colorimetric measurement, said illuminating beam is focused onto said second plane such that focal points for all wavelengths of said illuminating beam are at a distance from said first plane (15) and said illuminating beam (14) is reproduced out-of-focus in the form of a fuzzy circle having a spectrum similar to that of daylight and forming a measurement area on said surface (16) of said object to be measured.

9. The method as defined in claim 8, **characterized in that** when said device (1) is switched from the first mode to the second mode by means of a revolving mechanism, a first objective is revolved out of the optical path of said illuminating beam (14) and a second objective is revolved into the optical path of said illuminating beam (14).

10. The method as defined in claim 8, **characterized in that** said objective comprises a first objective (40) and a second objective (41), and when said device (1) is switched from the first mode to the second mode by a user, said first objective (40) is removed from the optical path of said illuminating beam (14) and said second objective is inserted into the optical path of said illuminating beam (14).

11. The method as defined in claim 8, **characterized in that** said device (1) consists of a base unit (2) and a first handpiece (3) and a second handpiece, wherein for operation in the first mode the first handpiece (3) comprising said first objective is connected by a user to said base unit (2) and for operation in the second mode said second handpiece comprising said second objective is connected to said base unit (2) by a user.

12. The method as defined in any one of claims 8 to 11, **characterized in that** said illuminating beam (14) consists of a plurality of component beams, said individual component beams being focused in the first mode to focal points disposed in a row on said first plane of said surface (16) of said object to be measured and are focused in the second mode onto the second plane (30), other than said first plane, of said surface (16) of said object to be measured such that said component beams are reproduced out-of-focus on said surface (16) of said object to be measured and are superimposed to form a measurement area of almost homogeneous intensity.

13. The method as defined in any one of claims 8 to 12, **characterized in that** the diameter of a diaphragm (7) situated in the optical path of said monitoring beam (18) so as to be confocal to said surface (16) of said object to be measured and used in the first mode for 3D measurement using the chromatic confocal method of measurement is adjusted to be larger than the diameter of said diaphragm (7) used in the second mode for colorimetric measurement, by means of diaphragm adjusting means, such that the depth of field in the first mode is shorter than the depth of field in the second mode.

14. The method as defined in claim 13, **characterized in that** said diaphragm (7) is electronically controlled, by which means the diameter of said diaphragm (7) is adjusted.

## Revendications

1. Dispositif (1) de mesure 3D optique, comprenant un objectif (12), **caractérisé en ce que** le dispositif est réglable entre un premier mode pour la mesure 3D optique au moyen du procédé de mesure confocale chromatique et un deuxième mode pour la colorimétrie, **en ce que** dans le premier mode, l'objectif (12) permet de focaliser un faisceau d'éclairage à large bande (14) sur un premier plan (15) d'une surface d'objet de mesure (16), et dans le deuxième mode, l'objectif (12) permet de focaliser le faisceau d'éclairage à large bande (14) sur un deuxième plan (30) en dehors du premier plan (15) à une distance d de la surface d'objet de mesure (16), dans lequel dans le deuxième mode pour la colorimétrie, la distance focale de l'objectif (12) peut être sélectionnée de telle sorte que les points focaux pour toutes les longueurs d'onde du faisceau d'éclairage (14) se trouvent en dehors du premier plan (15) et que le faisceau d'éclairage (14) soit représenté de manière floue sur la surface d'objet de mesure (16) comme un champ de mesure sous la forme d'un cercle de flou, dans lequel le réglage de la distance focale s'effectue en tournant un moyen de réglage de l'objectif qui règle un mécanisme interne de l'objectif pour modifier la distance focale.

2. Dispositif (1) de mesure 3D optique, comprenant un premier objectif (40) et un deuxième objectif (41), **caractérisé en ce que** le dispositif est réglable entre un premier mode pour la mesure 3D optique au moyen du procédé de mesure confocale chromatique et un deuxième mode pour la colorimétrie, **en ce que** dans le premier mode, le premier objectif (40) permet de focaliser un faisceau d'éclairage à large bande (14) sur un premier plan (15) d'une surface d'objet de mesure (16), et dans le deuxième mode, le deuxième objectif (41) permet de focaliser le faisceau d'éclairage à large bande (14) sur un deuxième plan (30) en dehors du premier plan (15) à une distance d de la surface d'objet de mesure (16), dans lequel dans le deuxième mode pour la colorimétrie, la distance focale du deuxième objectif (41) peut être sélectionnée de telle sorte que les points focaux pour toutes les longueurs d'onde du faisceau d'éclairage (14) se trouvent en dehors du premier plan (15) et que le faisceau d'éclairage (14) soit représenté de manière floue sur la surface d'objet de mesure (16) comme un champ de mesure sous la forme d'un cercle de flou, dans lequel un mécanisme de pivotement (42) permet de faire pivoter le premier objectif (40) sur la trajectoire du faisceau d'éclairage (14) pour fonctionner dans le premier mode et le deuxième objectif (41) pour fonctionner dans le deuxième mode.

3. Dispositif (1) de mesure 3D optique, comprenant un premier objectif (40) et un deuxième objectif (41), **caractérisé en ce que** le dispositif est réglable entre un premier mode pour la mesure 3D optique au moyen du procédé de mesure confocale chromatique et un deuxième mode pour la colorimétrie, **en ce que** dans le premier mode, le premier objectif (40) permet de focaliser un faisceau d'éclairage à large bande (14) sur un premier plan (15) d'une surface d'objet de mesure (16), et dans le deuxième mode, le deuxième objectif (41) permet de focaliser le faisceau d'éclairage à large bande (14) sur un deuxième plan (30) en dehors du premier plan (15) à une distance d de la surface d'objet de mesure (16), dans lequel dans le deuxième mode pour la colorimétrie, la distance focale du deuxième objectif (41) peut être sélectionnée de telle sorte que les points focaux pour toutes les longueurs d'onde du faisceau d'éclairage (14) se trouvent en dehors du premier plan (15) et que le faisceau d'éclairage (14) soit représenté de manière floue sur la surface d'objet de mesure (16) comme un champ de mesure sous la forme d'un cercle de flou, dans lequel le premier objectif (40) peut être introduit par un utilisateur sur la trajectoire du faisceau d'éclairage (14) pour fonctionner dans le premier mode, et le deuxième objectif (41) peut y être introduit pour fonctionner dans le deuxième mode.

4. Dispositif (1) de mesure 3D optique, comprenant un premier objectif (40) et un deuxième objectif (41), **caractérisé en ce que** le dispositif est réglable entre un premier mode pour la mesure 3D optique au moyen du procédé de mesure confocale chromatique et un deuxième mode pour la colorimétrie, **en ce que** dans le premier mode, le premier objectif (40) permet de focaliser un faisceau d'éclairage à large bande (14) sur un premier plan (15) d'une surface d'objet de mesure (16), et dans le deuxième mode, le deuxième objectif (41) permet de focaliser le faisceau d'éclairage à large bande (14) sur un deuxième plan (30) en dehors du premier plan (15) à une distance d de la surface d'objet de mesure (16), dans lequel dans le deuxième mode pour la colorimétrie, la distance focale du deuxième objectif (41) peut être sélectionnée de telle sorte que les points focaux pour toutes les longueurs d'onde du faisceau d'éclairage (14) se trouvent en dehors du premier plan (15) et que le faisceau d'éclairage (14) soit représenté de manière floue sur la surface d'objet de mesure (16) comme un champ de mesure sous la forme d'un cercle de flou, dans lequel le dispositif (1) se compose d'une unité de base (2), d'une première pièce à main (3) et d'une deuxième pièce à main, dans lequel la première pièce à main et la deuxième pièce à main sont reliées à la partie de base (2) par un guide d'ondes optiques (4), dans lequel l'unité de base (2) comprend une source de lumière (5), un séparateur de faisceaux (6) et un capteur de couleur (8), dans lequel la première pièce à main (3) avec le premier objectif (40) peut être reliée à l'unité de base (2) par un utilisateur pour fonctionner dans le premier mode et la deuxième pièce à main avec le deuxième objectif (41) peut y être reliée pour fonctionner dans le deuxième mode.

5. Dispositif (1) selon l'une quelconque des revendications 1 à 4, **caractérisé en ce que** le faisceau d'éclairage (14) se compose de plusieurs faisceaux partiels (14.1, 14.2, 14.3) s'étendant en parallèle dans un plan, dans lequel l'objectif (12, 40, 41) respectif disposé sur la trajectoire du faisceau d'éclairage (14) et comprenant plusieurs objectifs partiels (12.1, 12.2, 12.3) permet dans le premier mode de focaliser les faisceaux partiels individuels (14.1, 14.2, 14.3) sur des points focaux (19.1, 19.2, 19.3) disposés en alignement sur le premier plan (15) de la surface d'objet de mesure (16), et dans le deuxième mode de les focaliser sur des points focaux (21.1, 21.2, 21.3) disposés en alignement sur le deuxième plan (30) en dehors du premier plan (15), de sorte que les faisceaux partiels (12.1, 12.2, 12.3) sont représentés de manière floue sur la surface d'objet de mesure (16) sous la forme de cercles de flou (31.1, 31.2, 31.3) et se superposent pour former un champ de mesure.

6. Dispositif (1) selon l'une quelconque des revendications 1 à 5, **caractérisé en ce que** le diamètre d'un diaphragme (7) qui est disposé de manière confocale par rapport à la surface d'objet de mesure (16) sur la trajectoire du faisceau d'observation (18), dans le premier mode pour la mesure 3D au moyen du procédé de mesure confocale chromatique, est supérieur au diamètre du diaphragme dans le deuxième mode pour la colorimétrie, de sorte que la profondeur de champ dans le premier mode est inférieure à la profondeur de champ dans le deuxième mode, dans lequel le diaphragme (7) peut être commandé et le diamètre du diaphragme (7) est réglable.

7. Dispositif (1) selon l'une quelconque des revendications 1 à 5, **caractérisé en ce que** le diamètre d'un diaphragme (7) qui est disposé de manière confocale par rapport à la surface d'objet de mesure (16) sur la trajectoire du faisceau d'observation (18), dans le premier mode pour la mesure 3D au moyen du procédé de mesure confocale chromatique, est supérieur au diamètre du diaphragme dans le deuxième mode pour la colorimétrie, de sorte que la profondeur de champ dans le premier mode est inférieure à la profondeur de champ dans le deuxième mode, dans lequel le diaphragme (7) ayant un plus grand diamètre dans le premier mode peut être remplacé par un diaphragme ayant un plus petit diamètre dans le deuxième mode.

8. Procédé de mesure 3D optique et de colorimétrie, **caractérisé en ce qu'**un dispositif (1) est réglé entre un premier mode pour la mesure 3D optique au moyen du procédé de mesure confocale chromatique et un deuxième mode pour la colorimétrie, **en ce que** dans le premier mode, un faisceau d'éclairage à large bande (14) est focalisé sur un premier plan (15) d'une surface d'objet de mesure (16), et dans le deuxième mode, le faisceau d'éclairage à large bande (14) est focalisé au moyen de l'objectif (12) sur un deuxième plan (30) en dehors du premier plan (15) à une distance d de la surface d'objet de mesure (16), dans lequel dans le deuxième mode pour la colorimétrie, le faisceau d'éclairage (14) est focalisé sur le deuxième plan (30) de telle sorte que les points focaux pour toutes les longueurs d'onde du faisceau d'éclairage (14) se trouvent en dehors du premier plan (15), et **en ce que** le faisceau d'éclairage (14) est représenté sur la surface d'objet de mesure (16) comme un champ de mesure sous la forme d'un cercle de flou avec un spectre proche de la lumière naturelle.

9. Procédé selon la revendication 8, **caractérisé en ce que** lors du réglage du dispositif (1) du premier mode au deuxième mode au moyen d'un mécanisme de pivotement, un premier objectif sort par pivotement de la trajectoire du faisceau d'éclairage (14), et un deuxième objectif entre par pivotement dans la trajectoire du faisceau d'éclairage (14).

10. Procédé selon la revendication 8, **caractérisé en ce que** le dispositif (1) comprend un premier objectif (40) et un deuxième objectif (41), dans lequel lors du réglage du dispositif (1) du premier mode au deuxième mode par un utilisateur, le premier objectif (40) est sorti de la trajectoire du faisceau d'éclairage (14), et le deuxième objectif est placé sur la trajectoire du faisceau d'éclairage (14).

11. Procédé selon la revendication 8, **caractérisé en ce que** le dispositif (1) se compose d'une unité de base (2), d'une première pièce à main (3) et d'une deuxième pièce à main (3), dans lequel la première pièce avec un premier objectif (40) est reliée à l'unité de base (2) par un utilisateur dans le premier mode, et la deuxième pièce à main avec un deuxième objectif (41) y est reliée pour fonctionner dans le deuxième mode.

12. Procédé selon l'une quelconque des revendications 8 à 11, **caractérisé en ce que** le faisceau d'éclairage (14) se compose de plusieurs faisceaux partiels, dans lequel, dans le premier mode, les faisceaux partiels individuels sont focalisés sur des points focaux disposés en alignement dans le premier plan de la surface d'objet de mesure (16), et dans le deuxième mode, ils sont focalisés sur le deuxième plan (30) en dehors du premier plan de la surface d'objet de mesure (16), de sorte que les faisceaux partiels sont représentés de manière floue sur la surface d'objet de mesure (16) et se superposent pour former un champ de mesure d'intensité pratiquement homogène.

13. Procédé selon l'une quelconque des revendications 8 à 12, **caractérisé en ce que** le diamètre d'un diaphragme (7) disposé de manière confocale par rapport à la surface d'objet de mesure (16) sur la trajectoire du faisceau d'observation (18) est réglé dans le premier mode pour la mesure 3D au moyen du procédé de mesure confocale chromatique pour être supérieur au diamètre du diaphragme (7) dans le deuxième mode pour la colorimétrie par un moyen formant diaphragme, de sorte que la profondeur de champ dans le premier mode est inférieure à la profondeur de champ dans le deuxième mode.

14. Procédé selon la revendication 13, **caractérisé en ce que** le diaphragme (7) est commandé de manière électronique ce qui permet de régler le diamètre du diaphragme (7).
